# FASCICULE DE BREVET EUROPEEN

(11) **EP 2 341 001 B1**
(45) Date de publication et mention de la délivrance du brevet: **23.05.2012**
(21) Numéro de dépôt: 10196051.6
(22) Date de dépôt: 20.12.2010
(51) Int. Cl.: B65B 11/10, B65B 35/44, B65B 35/50, B65G 47/08

(54) **Procédé et machine de suremballage d'articles pour former des lots d'articles, du type comprenant une certaine pluralité d'articles et un suremballage en carton**
Verfahren und Maschine zur Umverpackung von Artikeln zur Bildung von Artikellosen, bestehend aus einer Vielzahl von Artikeln und einer Umverpackung aus Karton
Method and machine for overpackaging items in order to form batches of items, including a certain plurality of items and a cardboard overpackaging

(30) Priorité: 22.12.2009 FR 0959440
(43) Date de publication de la demande: 06.07.2011
(73) Titulaire: Automatisation et renovation du conditionnement dans les industries laitieres Arcil, 95650 Puiseux Pontoise (FR)
(72) Inventeur: Bachelle, Romuald, 22120 Yfiniac (FR)
(74) Mandataire: Derambure, Christian

(56) Documents cités:
- EP-A1- 1 116 676
- EP-A1- 1 591 364
- EP-B- 1 530 541
- WO-A1-2007/038311
- US-A- 3 416 675
- US-A1- 2005 274 091

## Description

L'invention est relative au suremballage d'articles afin de former des lots d'articles suremballés comprenant chacun une certaine pluralité d'articles et un suremballage en carton (ou analogue) entourant le lot.

L'invention s'applique tout spécialement au cas de produits laitiers frais ou ultra-frais tels que yaourts et assimilés, crèmes dessert, glaces et assimilés, mais également des produits fromagers, des compotes... L'invention s'applique aussi à des produits de natures et/ou de destinations différentes mais que l'on peut considérer comme analogues au regard de leur groupement en lots et de leur suremballage.

De tels produits sont emballés dans un emballage primaire tel que typiquement un pot en matière plastique, en carton paraffiné ou analogue destiné à être fermé par un opercule. Le terme « pot » doit être compris au sens large comme comprenant les pots à proprement parler, mais également les barquettes, les coupelles, ou toute autre forme d'emballage primaire analogue. Par convention, un emballage primaire empli de son contenu est appelé « article ». Ces articles (ou emballages primaires emplis de leur contenu) sont agencés en plaquettes individualisées comprenant plusieurs articles côte à côte et attachés les uns aux autres en étant agencés en colonnes et/ou lignes avec entre eux des lignes ou zones frangibles à plus faible résistance. Par exemple, une plaquette comporte deux pots ou quatre pots agencés en deux rangées comprenant chacune deux pots ou encore six pots en deux rangées comprenant chacune trois pots... Les emballages primaires sont agencés pour former un groupe - ou pack - comprenant une seule plaquette de pots ou plusieurs plaquettes de pots superposées entourées d'un suremballage secondaire de regroupement et de maintien, de sorte que l'ensemble forme un tout pouvant être manipulé, transporté et stocké par le consommateur. Un tel suremballage est typiquement réalisé en carton plat ou en un matériau incluant du carton, à partir d'un flan découpé pour avoir la forme adaptée, lequel est ensuite disposé autour de la ou des plaquettes, puis plié et enfin fermé sur lui-même.

Pour la production de tels packs d'articles suremballés, on dispose ou on fabrique le contenu à emballer, on dispose ou on fabrique les emballages primaires (pots et opercules) agencés en plaquettes, on dispose ou on fabrique les flans de suremballage individualisés. Puis, on réalise les articles eux-mêmes, c'est-à-dire que l'on emplit les emballages primaires de chaque plaquette avec le ou les contenus souhaités puis on ferme les emballages primaires de chaque plaquette par mise en place des opercules. Puis on forme les lots ou packs et s'ils comprennent plusieurs plaquettes, on assure leur regroupement, par exemple superposition. Puis, on dispose autour de chaque lot ou pack un flan de suremballage que l'on plie et que l'on ferme sur lui-même. Une partie de ces opérations est réalisée dans des machines de suremballage.

Une telle machine de suremballage comporte une arrivée d'articles en plaquettes, une arrivée de flans, une sortie de lots ou packs comprenant les articles et le suremballage.

Le document EP-A-1116676 [*] qui constitue l'état de la technique antérieure à partir duquel sont définies les caractéristiques de l'invention revendiquée, vise une machine de suremballage comprenant un convoyeur apte à recevoir des groupes d'articles successifs pour les acheminer depuis une localisation amont vers une localisation aval ; une voie d'avancement le long de laquelle les articles sont acheminés un à un vers le dit convoyeur en étant juxtaposés les uns aux autres ; des moyens de transfert des articles depuis la voie d'avancement vers le convoyeur, aptes à prendre et grouper les articles pour former des packs espacés ; et un transporteur apte d'une part à acheminer un par un des flans en carton, posés sensiblement à plat sur le transporteur, vers le dit convoyeur, et à disposer les flans sur le convoyeur en regard des packs d'articles ; des moyens d'entraînement et des moyens de transfert ; et enfin un dispositif de commande et d'asservissement des moyens d'entraînement, apte à appliquer à chaque moyen d'entraînement un profil de vitesse choisi parmi un ensemble préprogrammé de profils de vitesses, pour permettre le réglage du pas et/ou du nombre d'articles par pack en fonction du pas et/ou du type de pack souhaités.

Le document EP-A-1112933 décrit, dans le cadre d'une machine telle que celle décrite précédemment un système de convoyage d'objets, qui comprend au moins un transporteur sans fin apte à acheminer les objets le long d'une surface de transport, le transporteur comprenant une pluralité de poussoirs régulièrement espacés, fixés à un support mobile des poussoirs, circulant en continu, à sens unique et de manière périodique le long d'une trajectoire en boucle fermée qui s'étend sensiblement dans un plan de convoyage, perpendiculaire à la surface de transport, la trajectoire étant localement contiguë à la surface de transport, dans lequel chaque poussoir est monté mobile entre une position dite inactive où le poussoir est localisé à distance de la surface de transport et ne saille pas de celle-ci, et une position dite active où il saille au moins partiellement de la surface de transport pour venir en prise avec un objet et pousser celui-ci le long de la surface de transport, de sorte que l'on peut faire varier le nombre de poussoirs simultanément en position active, et, de cette manière faire varier la distance entre deux poussoirs actifs.

L'état de la technique comprend également les documents US 3 416 675, EP 1530 541, US 2005/274091, WO 2007/038311, EP-A-1530541 et EP-A-1591364.

Avec les machines de suremballage connues à manipulateurs robotisés et de type à pas constant dans lesquelles le pas est associé à la longueur des packs ou lots à réaliser, la vitesse linéaire de la machine doit être adaptée au flux des plaquettes d'articles entrant dans la machine. Plus le nombre d'articles par pack est faible, plus la vitesse linéaire de la machine est élevée. Il s'ensuit des accélérations ou des décélérations importantes qui affectent inévitablement la qualité de fonctionnement de la machine et des lots ou packs réalisés. La machine doit s'adapter au flux entrant, alors que les voies d'entrée ne sont pas synchronisées, de sorte que pour être certain que tous les articles entrants soient pris par les manipulateurs, il faut prévoir un nombre suffisant - élevé - de tels manipulateurs. De plus, il est nécessaire d'anticiper le dépilage des flans nécessitant le transfert des flans lorsqu'il existe un espace vide sur le convoyeur des articles. Egalement, il est nécessaire d'amorcer le transport des flans en début de production. En outre, le magasin de flans est situé en dehors de la machine proprement dite et le dépliage des flans se passe en amont de la zone robotisée. Avec une telle machine, le pas est fixe et il n'est pas possible d'adapter la vitesse de la machine en fonction des formats.

Le problème à la base de l'invention est de proposer un procédé et une machine de suremballage à manipulateurs robotisés qui soient non à pas constant mais à pas variable et qui permettent des variations multiples de format de façon aisée.

A cet effet, et selon un premier aspect, l'invention a pour objet un procédé de suremballage, dans un flan de suremballage, d'articles agencés en plaquettes comportant chacune une pluralité d'articles de même longueur dans la direction de défilement, disposés en une ou plusieurs colonnes et/ou une ou plusieurs lignes, pour former des lots d'articles agencés en une ou plusieurs couches de plaquettes et comportant un suremballage périphérique, dans lequel, de façon dynamique :
- on dispose d'un flux axial aléatoire entrant de plaquettes d'articles et on constitue des lots d'articles,
- on dispose d'une pile de flans de suremballage à plat et on dépile les flans successivement,
- on fait coopérer successivement chaque lot d'articles constitué avec chaque flan à plat dépilé, puis on plie le flan autour du lot d'articles et on le solidarise sur lui-même,
- on évacue le flux axial sortant des lots d'articles suremballés,
- les lots d'articles suremballés comportant un nombre d'articles par plaquette, une disposition des articles sur chaque plaquette et un nombre de plaquettes empilées variable en fonction du format des lots souhaités.

Selon une caractéristique de ce procédé :
- on règle et on synchronise au pas de la machine les plaquettes d'articles du flux axial entrant pour former un flux axial synchronisé de plaquettes d'articles,
- on transfère toutes les plaquettes d'articles depuis le flux axial synchronisé de plaquettes d'articles pour constituer un flux axial synchronisé de lots d'articles, selon le format et la cadence souhaités,
- chaque lot d'articles du flux axial synchronisé de lots d'articles est ainsi séparé axialement du lot d'articles qui le précède et/ou du lot d'articles qui lui succède d'un espace vide axial ayant la longueur axiale d'un article ou d'un multiple de la longueur axiale d'un article, le pas axial de la machine étant ainsi variable et adapté à la longueur axiale du lot d'articles,
- puis, on dépile les flans à plat à la demande en fonction des plaquettes d'articles ainsi transférées pour constituer un flux axial synchronisé de flans à plat correspondant exactement au flux axial synchronisé de lots d'articles,
- chaque flan du flux axial synchronisé de flans à plat est ainsi séparé du flan qui le précède et/ou du flan qui lui succède d'un espace vide axial ayant la longueur axiale d'un article ou d'un multiple de la longueur axiale d'un article,
- à partir du flux axial synchronisé de lots d'articles et du flux axial synchronisé de flans à plat, on fait coopérer successivement chaque lot d'articles avec chaque flan à plat avant que plier le flan autour du lot d'articles et de le solidariser sur lui-même.

Selon une réalisation, avant de faire coopérer chaque lot d'articles du flux axial synchronisé de lots d'articles avec chaque flan à plat du flux axial synchronisé de flans à plat, on assure un recalage fin et final axial de la synchronisation des plaquettes d'articles du flux axial synchronisé de plaquettes d'articles.

Selon une réalisation, on transfère toutes les plaquettes d'articles depuis le flux synchronisé de plaquettes d'articles pour constituer un flux axial synchronisé de lots d'articles, selon le format et la cadence souhaités, par une manipulation de prise robotisée.

Selon une réalisation, on transfère toutes les plaquettes d'articles depuis le flux axial synchronisé de plaquettes d'articles pour constituer un flux axial synchronisé de lots d'articles, selon le format et la cadence souhaités, par une manipulation de prise d'une seule plaquette à la fois ou de plusieurs plaquettes simultanément.

Selon une réalisation du procédé :
- on contrôle chaque pas du flux axial synchronisé de lots d'articles,
- si le pas comporte un lot d'articles, on commande le dépilage d'un flan à plat,
- si le pas ne comporte pas de lot d'articles, on ne commande pas le dépilage d'un flan à plat,
- et on fait coopérer le flux axial synchronisé de lots d'articles et le flux axial synchronisé de flans à plat, de manière qu'à un pas comportant un lot d'articles correspond un pas comportant un flan à plat et qu'à un pas ne comportant pas un lot d'articles correspond un pas ne comportant pas un flan à plat.

Selon une réalisation, pour constituer un flux axial synchronisé de flans à plat dans lequel chaque flan du flux est séparé du flan qui le précède et/ou du flan qui lui succède d'un espace vide axial ayant la longueur axiale d'un article ou d'un multiple de la longueur axiale d'un article, on pousse chaque flan à plat du flux axial synchronisé de flans à plat au moyen de doigts pousseurs d'entrainement régulièrement espacées axialement et agencées pour être soit en situation saillante active soit en situation escamotée inactive, on guide et on aiguille les doigts pousseurs successifs pour qu'ils se trouvent dans la situation saillante active ou dans la situation escamotée inactive correspondant à la configuration requise pour entraîner les flans à plat successifs du flux axial synchronisé de flans à plat en correspondance avec le flux axial synchronisé de lots d'articles.

Selon une réalisation, dans un mode réglage de pas du flux axial synchronisé de flans à plat, on procède comme suit :
- dans un tronçon de cheminement inactif de retour des doigts pousseurs où les doigts pousseurs n'assurent aucune fonction de poussée des flans à plat, on aiguille les doigts pousseurs successifs pour les amener à se trouver dans la situation saillante active ou dans la situation escamotée inactive de manière à définir une configuration de doigts pousseurs successifs correspondant à la configuration requise pour entraîner les flans à plat successifs du flux axial synchronisé de flans à plat en correspondance avec le flux axial synchronisé de lots d'articles,
- une fois les doigts ainsi aiguillés et amenés dans la situation saillante active ou dans la situation escamotée inactive requise, on guide les doigts pousseurs en déplacement en les maintenant leur situation saillante active ou escamotée inactive, y compris dans un tronçon de cheminement actif d'amené des doigts pousseurs où les doigts pousseurs assurent leur fonction de poussée des flans à plat.

Selon une réalisation, dans un mode de production, sans réglage de pas du flux axial synchronisé de flans à plat, on procède comme suit : on guide les doigts pousseurs en déplacement en les maintenant leur situation saillante active ou escamotée inactive correspondant à la configuration requise pour entraîner les flans à plat successifs du flux axial synchronisé de flans à plat en correspondance avec le flux axial synchronisé de lots d'articles, dans un tronçon de cheminement inactif de retour des doigts pousseurs où les doigts pousseurs n'assurent aucune fonction de poussée des flans à plat et dans un tronçon de cheminement actif d'amené des doigts pousseurs où les doigts pousseurs assurent leur fonction de poussée des flans à plat.

Selon un second aspect, l'invention a pour objet une machine de suremballage, dans un flan de suremballage, d'articles agencés en plaquettes comportant chacune une pluralité d'articles de même longueur dans la direction de défilement, disposés en une ou plusieurs colonnes et/ou une ou plusieurs lignes, pour former des lots d'articles agencés en une ou plusieurs couches de plaquettes et comportant un suremballage périphérique, pour la mise en oeuvre du procédé qui vient d'être décrit.

Une telle machine comporte :
- vers l'amont, des moyens d'amenée axiale d'un flux axial aléatoire entrant de plaquettes d'articles et des moyens de constitution des lots d'articles,
- vers l'amont, des moyens pour former une pile de flans de suremballage à plat et des moyens de dépilage des flans successivement,
- vers l'aval des moyens de constitution des lots d'articles et des moyens de dépilage des flans, des moyens de coopération de chaque lot d'articles constitué avec chaque flan à plat dépilé et, en aval, des moyens pour plier le flan autour du lot d'articles et pour le solidariser sur lui-même,
- vers l'aval, des moyens d'évacuation axiale du flux axial sortant des lots d'articles suremballés.

Selon une caractéristique d'une telle machine, elle comporte :
- vers l'amont, des moyens de réglage et des moyens de synchronisation au pas de la machine les plaquettes d'articles du flux entrant, suivis de moyens convoyeur axial d'un flux axial synchronisé de plaquettes d'articles,
- des moyens de transfert de toutes les plaquettes d'articles depuis les moyens convoyeur axial du flux axial synchronisé de plaquettes d'articles vers des moyens convoyeur axial d'un flux axial synchronisé de lots d'articles, selon le format et la cadence souhaités,
- des moyens de dépilage des flans à plat à la demande responsifs aux moyens de transfert des plaquettes d'articles, suivis de moyens convoyeur axial d'un flux axial synchronisé de flans à plat en correspondance avec les moyens convoyeur axial du flux axial synchronisé de lots d'articles,
- en aval des moyens convoyeur axial du flux axial synchronisé de lots d'articles et des moyens convoyeur axial du flux axial synchronisé de flans à plat, des moyens de coopération successivement de chaque lot d'articles avec chaque flan à plat et, en aval, des moyens pour plier le flan autour du lot d'articles et pour le solidariser sur lui-même.

Selon une réalisation, les moyens convoyeur axial d'un flux axial synchronisé de lots d'articles comportent des saillies de positionnement et maintien régulièrement espacées axialement pour qu'un lot d'articles du flux synchronisé de lots d'articles soit positivement maintenu séparé du lot d'articles qui le précède et/ou du lot d'articles qui lui succède d'un espace vide axial ayant au minimum la longueur axiale d'un article ou ayant la longueur axiale d'un multiple de la longueur axiale d'un article, le pas axial de la machine étant ainsi variable et adapté à la longueur du lot d'articles, les moyens convoyeur axial d'un flux axial synchronisé de lots d'articles étant adaptés au convoyage de lots d'articles de longueur axiale variable, sans nécessité de réglage.

Selon une réalisation, les moyens convoyeur axial d'un flux axial synchronisé de lots d'articles est réglable en écartement transversal, les moyens convoyeur axial d'un flux axial synchronisé de lots d'articles étant adaptés au convoyage de lots d'articles de longueur transversale variable.

Selon une réalisation, les moyens convoyeur axial d'un flux axial synchronisé de flans à plat comportent des doigts pousseurs de positionnement et maintien régulièrement espacées axialement et escamotables pour qu'un flan à plat du flux synchronisé de flan à plat soit positivement maintenu séparé du flan à plat qui le précède et/ou du flan à plat qui lui succède d'un espace vide axial ayant au minimum la longueur axiale d'un article ou ayant la longueur axiale d'un multiple de la longueur axiale d'un article, le pas axial de la machine étant ainsi variable et adapté à la longueur du lot d'articles, les moyens convoyeur axial d'un flux axial synchronisé de flans étant adaptés au convoyage de flans de longueur axiale variable, sans nécessité de réglage.

Selon une réalisation, les moyens convoyeur axial d'un flux axial synchronisé de flans à plat est réglable en écartement transversal, les moyens convoyeur axial d'un flux axial synchronisé de flans à plat étant adaptés au convoyage de flans à plat de longueur transversale variable.

Selon une réalisation, la machine de suremballage comporte en amont des moyens de coopération de chaque lot d'articles du flux axial synchronisé de lots d'articles avec chaque flan à plat du flux axial synchronisé de flans à plat, de moyens de recalage fin et final de la synchronisation des plaquettes d'articles du flux axial synchronisé de plaquettes d'articles.

Selon une réalisation, les moyens de transfert de toutes les plaquettes d'articles depuis les moyens convoyeur axial du flux axial synchronisé de plaquettes d'articles vers des moyens convoyeur axial d'un flux axial synchronisé de lots d'articles, selon le format et la cadence souhaités, comprennent un ou plusieurs robots de manipulation de prise.

Selon une réalisation, les moyens de transfert de toutes les plaquettes d'articles depuis les moyens convoyeur axial du flux axial synchronisé de plaquettes d'articles vers des moyens convoyeur axial d'un flux axial synchronisé de lots d'articles, selon le format et la cadence souhaités, comprennent des moyens de manipulation de prise d'une seule plaquette à la fois ou de plusieurs plaquettes simultanément.

Selon une réalisation, la machine de suremballage comporte des moyens de contrôle de chaque pas des moyens convoyeur axial du flux axial synchronisé de lots d'articles pour détecter la présence ou l'absence d'un lot d'articles et des moyens de commande des moyens de dépilage responsifs à ces moyens de contrôle.

Selon une réalisation, les moyens de réglage et les moyens de synchronisation au pas de la machine des plaquettes d'articles du flux entrant comprennent la partie amont des moyens convoyeur axial d'un flux axial synchronisé de plaquettes d'articles à laquelle sont associés des organes escamotables de blocage aval des plaquettes d'articles se déplaçant axialement à une vitesse plus faible que celle des moyens convoyeur axial d'un flux axial synchronisé de plaquettes d'articles.

Selon une réalisation, la partie aval des moyens convoyeur axial du flux axial synchronisé de plaquettes d'articles est d'une longueur suffisante apte à ce que toutes les plaquettes qu'ils reçoivent puisent être transférées par les moyens de transfert vers les moyens convoyeur axial d'un flux axial synchronisé des lots d'articles.

Selon une réalisation, les moyens convoyeur axial du flux axial synchronisé de plaquettes d'articles et les moyens convoyeur axial du flux axial synchronisé des lots d'articles sont disposés côte à côte.

Selon une réalisation, les moyens convoyeur axial du flux axial synchronisé de plaquettes d'articles ont une largeur transversale apte à recevoir une pluralité de plaquettes d'articles.

Selon une réalisation, les moyens convoyeur axial du flux axial synchronisé des lots d'articles ont une largeur transversale apte à recevoir une unique plaquette d'articles.

Selon une réalisation, les moyens convoyeur axial d'un flux axial synchronisé de lots d'articles se présentent sous la forme de deux courroies sans fin disposées parallèlement entre elles et formant un couloir de convoyage, supportant des saillies de positionnement et maintien régulièrement espacées axialement, agencées pour être dirigées vers le couloir, les deux courroies étant portées par des moyens porteurs de manière mobile avec blocage, pour être réglable en écartement transversal.

Selon une réalisation, les moyens convoyeur axial d'un flux axial synchronisé de flans à plat se présentent sous la forme de deux courroies sans fin d'entraînement, disposées parallèlement entre elles en formant un couloir de convoyage, supportant des doigts pousseurs de positionnement et d'entraînement régulièrement espacées axialement, agencées mobiles et blocables en position de manière à être chacun séparément soit en situation saillante active soit en situation escamotée inactive, et comprennent des moyens de guidage et des moyens d'aiguillage des doigts pousseurs successifs aptes à ce qu'ils se trouvent dans la situation saillante active ou dans la situation escamotée inactive correspondant à la configuration requise pour entraîner les flans à plat successifs du flux axial synchronisé de flans à plat en correspondance avec le flux axial synchronisé de lots d'articles.

Selon une réalisation, les moyens convoyeur axial d'un flux axial synchronisé de flans à plat comprennent un tronçon de cheminement actif d'amené des doigts pousseurs où les doigts pousseurs assurent leur fonction de poussée des flans à plat et un tronçon de cheminement inactif de retour des doigts pousseurs où les doigts pousseurs n'assurent aucune fonction de poussée des flans à plat, tronçon sur lequel se trouvent les moyens de guidage et les moyens d'aiguillage des doigts pousseurs.

Selon une réalisation, un doigt pousseur est porté par une pièce d'entraînement axial portée par une courroie sans fin, la pièce d'entraînement axial étant apte à coopérer à coulissement axial avec une glissière de guidage axial, le doigt pousseur étant monté sur la pièce d'entraînement axial de façon articulée autour d'un axe transversal pour pouvoir pivoter de façon relative sur une course ayant deux positions de fin de course définissant les deux situations saillante active et escamotée inactive, le doigt pousseur comportant latéralement un téton de commande dirigé transversalement et écarté de l'axe de pivotement, coopérant avec l'une de deux glissières de guidage axial de téton, disposées parallèlement entre elles et à la glissière de guidage axial de la pièce d'entraînement, le téton étant dans l'une de deux glissières de guidage axial de téton dans la situation saillante active et étant dans l'autre des deux glissières de guidage axial de téton dans la situation escamotée inactive.

Selon une réalisation, les moyens d'aiguillage comprennent une dérivation de guidage reliant les deux glissières de guidage axial de téton et une pièce d'orientation mobile commandée apte à commander le guidage du téton pour qu'il reste dans la glissière de guidage axial de téton où il se trouvait ou qu'il soit orienté vers l'autre glissières de guidage axial de téton.

Selon une réalisation, les moyens convoyeur axial d'un flux axial synchronisé de flans à plat sont réglables en écartement transversal.

On décrit maintenant plusieurs modes de réalisation de l'invention à l'aide des dessins, dans lesquels :

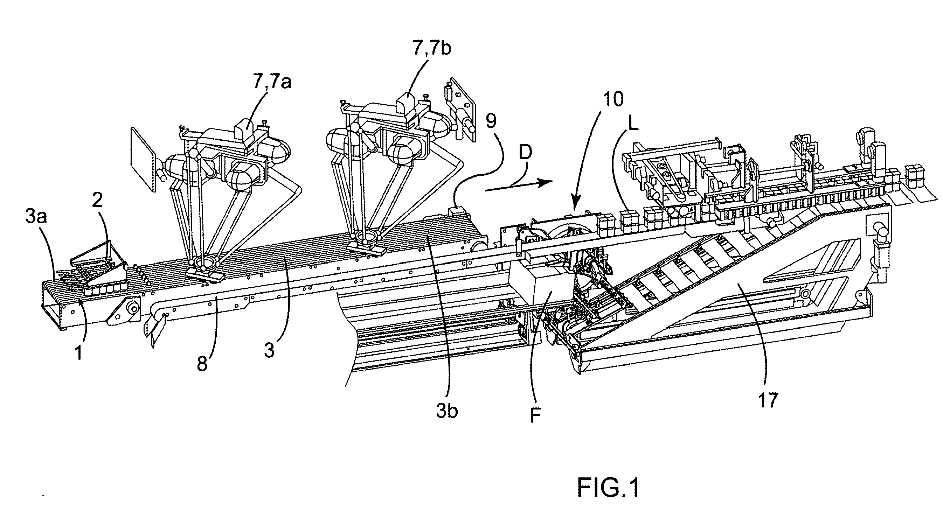

- La figure 1 est une vue d'ensemble partielle, en perspective d'une machine de suremballage selon l'invention, sur laquelle se trouvent des plaquettes d'articles, des lots d'articles et des flans à plat.
- La figure 2 est une vue de détail en perspective partielle de la partie amont de la machine, sans article, illustrant ses moyens de réglage et ses moyens de synchronisation au pas de la machine des plaquettes d'articles du flux entrant et ses moyens convoyeur axial d'un flux axial synchronisé de plaquettes d'articles.
- La figure 3 est une vue analogue à la figure 2, à plus petite échelle, la machine étant garnie d'articles.
- La figure 4 est une vue de détail en perspective partielle de la partie amont de la machine, avec articles, illustrant dans une étape de fonctionnement ses moyens de transfert des plaquettes d'articles depuis ses moyens convoyeur axial du flux axial synchronisé de plaquettes d'articles vers ses moyens convoyeur axial d'un flux axial synchronisé de lots d'articles.
- La figure 5 est une vue analogue à la figure 4, sous un autre angle de vue, dans une étape ultérieure de fonctionnement.
- La figure 6 est une vue analogue aux figures 4 et 5, à plus petite échelle et sous un autre angle de vue, dans une étape ultérieure de fonctionnement.
- La figure 7 est une vue partielle de dessus de la partie médiane de la machine, sans article, sans lot d'articles, et sans flan, illustrant ses moyens convoyeur axial d'un flux axial synchronisé de lots d'articles et ses moyens de recalage fin et final de la synchronisation des plaquettes d'articles du flux axial synchronisé de plaquettes d'articles.
- La figure 8 est une vue analogue à la figure 7, la machine étant garnie de lots d'articles comprenant quatre articles agencées en deux fois deux, chaque lot d'articles étant séparé des lots adjacents par un espace vide ayant la longueur axiale d'un article.
- La figure 9 est une vue analogue à la figure 8 dans le cas de lots d'articles comprenant six articles agencées en deux fois trois, chaque lot d'articles étant séparé des lots adjacents par un espace vide ayant la longueur axiale d'un article, cette figure avec la précédente illustrant la conception de la machine à pas variable.
- La figure 10 est une vue partielle en élévation de la partie médiane de la machine, sans flan, illustrant ses moyens de dépilage des flans à plat.
- La figure 11 est une vue de détail en perspective et à plus grande échelle partielle en élévation de la partie médiane de la machine, sans flan, illustrant ses moyens de dépilage des flans à plat et plus spécialement ses moyens aptes à écarter le flan à dépiler du flan qui lui succède comprenant des moyens d'accélération du flan à dépiler.
- La figure 12 est une vue analogue à la figure 10, des flans garnissant la machine.
- La figure 13 est une vue partielle de dessus de la partie médiane de la machine, avec flans, illustrant ses moyens de dépilage et son convoyeur axial d'un flux axial synchronisé de flans à plat.
- La figure 14 est un schéma en coupe par un plan vertical illustrant le convoyeur axial d'un flux axial synchronisé de flans à plat, ses doigts pousseurs, le tronçon de cheminement actif d'amené des doigts pousseurs et le tronçon de cheminement inactif de retour des doigts pousseurs où les doigts pousseurs n'assurent aucune fonction de poussée des flans à plat, et les moyens de guidage et les moyens d'aiguillage des doigts pousseurs.
- La figure 15 est une vue partielle en perspective à plus grande échelle du convoyeur de flans à plat garni de flans d'une certaine longueur axiale, deux flans successifs étant séparés par un espace vide correspondant à celui d'une longueur axiale d'un article du convoyeur axial d'un flux axial synchronisé de lots d'articles.
- La figure 16 est une vue analogue à la figure 15, sous un autre angle, dans le cas de flans à plat d'une autre longueur axiale, deux flans successifs étant séparés par un même espace vide.
- La figure 17 et la figure 18 sont deux vues partielles en perspective illustrant deux configurations différentes des pièces d'orientation mobiles de guidage du téton des doigts pousseurs.

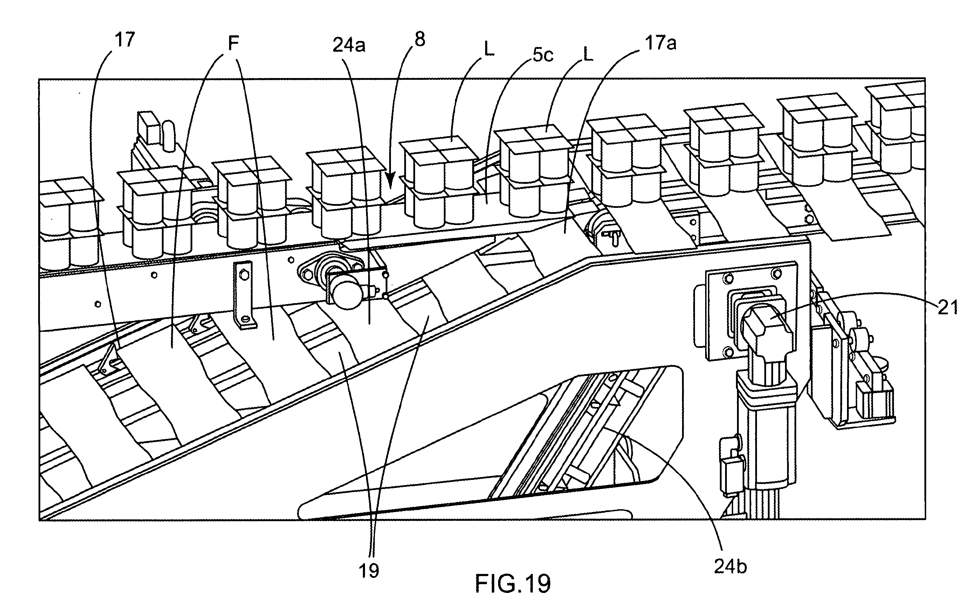

- La figure 19 est une vue partielle, en perspective, de dessus, de la partie médiane de la machine, illustrant l'accostage des flans à plat sous les lots d'articles.

L'invention est relative au suremballage, dans un flan de suremballage F, d'articles A agencés en plaquettes P comportant chacune une pluralité d'articles A de même longueur dans une direction D qui est une direction générale de défilement, qualifiée d'axiale. Pour une plaquette P donnée, les articles A sont disposés en une ou plusieurs colonnes et/ou une ou plusieurs lignes. Le procédé et la machine de suremballage selon l'invention visent à former des lots L d'articles agencés en une ou plusieurs couches de plaquettes P et comportant en outre un suremballage périphérique formé par le flan F replié et solidarisé sur lui-même.

Les articles A sont typiquement des emballages primaires tels que des pots en matière plastique, en carton paraffiné ou analogue destinés à être fermé par des opercules et contenant des produits laitiers frais ou ultra-frais tels que yaourts et assimilés, crèmes dessert, glaces et assimilés, mais également des produits fromagers, des compotes... Tout cela n'est qu'exemplatif et non limitatif et le terme « article » signifie par convention un emballage primaire empli de son contenu.

Comme indiqué précédemment, une plaquette P peut comporter par exemple deux pots ou quatre pots agencés en deux rangées comprenant chacune deux pots ou encore six pots en deux rangées comprenant chacune trois pots... tout cela n'étant donné qu'à titre exemplatif et non limitatif.

Le suremballage est typiquement réalisé à partir d'un flan F en carton plat ou en un matériau incluant du carton, découpé pour avoir la forme adaptée.

Dans une réalisation typique, les articles A ont une forme générale cylindrique ou prismatique ou pseudo cylindrique ou pseudo prismatique ou ovoïde ou analogue avec un axe disposé normalement verticalement. Dans une réalisation typique, un tel article A a une longueur axiale de l'ordre de quelques centimètres.

Dans la description, il est entendu que l'expression « plaquette P » signifie plaquette P d'articles A agencés en colonnes et lignes et que l'expression « lot L » signifie lot L d'articles.

Le procédé peut être mis en oeuvre et la machine peut fonctionner à condition de disposer de plaquettes P et de flans F à plat empilés. Ces plaquettes P et ces flans F sont élaborés séparément. En particulier le procédé selon l'invention peut être mis en oeuvre et la machine selon l'invention peut être installée en aval, notamment immédiatement en aval ou quasiment immédiatement en aval, d'une ligne ou d'une unité d'élaboration des articles A (formation du contenu, emplissage et fermeture).

Ainsi, on dispose d'un flux axial aléatoire entrant de plaquettes P.

Selon le procédé, on constitue des lots L d'articles, on dépile les flans successivement, on fait coopérer successivement chaque lot L constitué avec chaque flan F à plat dépilé, puis on plie le flan F autour du lot L et on le solidarise sur lui-même. Puis, on évacue les lots d'articles suremballés.

Les lots d'articles suremballés comportent un nombre d'articles A par plaquette, une disposition des articles A sur chaque plaquette P et un nombre de plaquettes P empilées qui est variable en fonction du format des lots d'articles suremballés souhaités.

Le procédé et la machine selon l'invention visent à ce que le changement de format puisse intervenir de façon aisée, rapide et sûre.

La machine comporte un bâti et des éléments support, appropriés.

Elle s'étend horizontalement le long d'une direction générale D qui est également la direction du mouvement d'entraînement des parties et organes d'entraînement dont est pourvue la machine, tels que convoyeurs ou moyens convoyeur. Cette direction D est également celle des flux : plaquettes P, flans F et lots L. la direction d est qualifiée d'axiale. Peuvent donc être ainsi qualifiés les convoyeurs, les moyens convoyeur, les flux (plaquettes P, flans F et lots L). Les convoyeurs ou moyens convoyeur et les flux sont en mouvement le long de la direction axiale D dans un sens donné, ce qui permet de définir sur la machine un côté amont (coté gauche sur les figures) et un côté aval (côté droit sur les figures). Par ailleurs, on qualifie de « transversal » une direction horizontale perpendiculaire à la direction axiale D.

La machine comporte vers l'amont, des moyens 1 d'amenée d'un flux aléatoire entrant de plaquettes P, tels qu'un tapis transporteur à bandes. Ces moyens 1 sont disposés en sortie ou à proximité de la sortie d'une ligne ou d'une unité d'élaboration des articles A.

Immédiatement à l'aval des moyens 1, mais par conséquent du côté général amont de la machine, la machine comporte des moyens 2 de réglage et de synchronisation au pas de la machine des plaquettes P du flux entrant.

Ces moyens 2 sont suivis de moyens convoyeur 3 d'un flux synchronisé de plaquettes P.

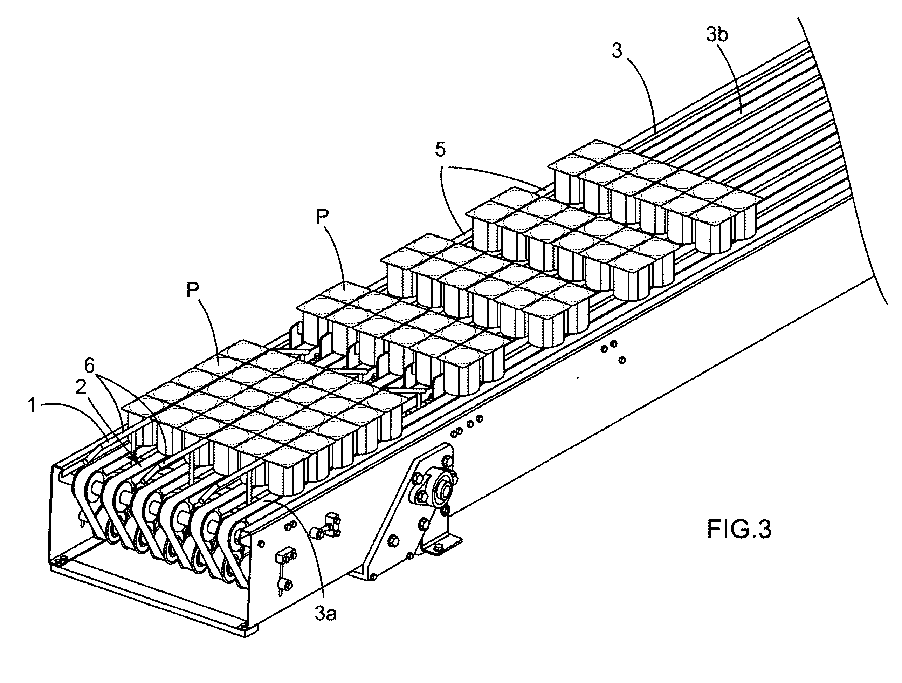

Dans la réalisation représentée, les moyens 2 de réglage et de synchronisation comprennent la partie amont 3a des moyens convoyeur 3 à laquelle sont associés des organes 4 escamotables de blocage aval des plaquettes P. Ces organes sont montés à déplacement axial et ils se déplacent à une vitesse plus faible que celle des moyens convoyeur 3. Ainsi, les organes 4 assurent à la fois l'accumulation des plaquettes P à l'amont des moyens convoyeur 3 et lorsqu'ils sont escamotés à l'extrémité aval de leur course, ils libèrent les plaquettes P qui sont alors entraînées par les moyens convoyeur 3. Ce faisant on crée entre deux plaquettes P successives qui dans la partie d'accumulation étaient adjacentes, un espace vide 5 (figure 3).

Cet espace vide 5 correspond - aux jeux de fonctionnement près - à la longueur axiale d'un article A.

Dans la réalisation représentée, les moyens convoyeur 3 permettent l'amenée de plusieurs plaquettes P de front.

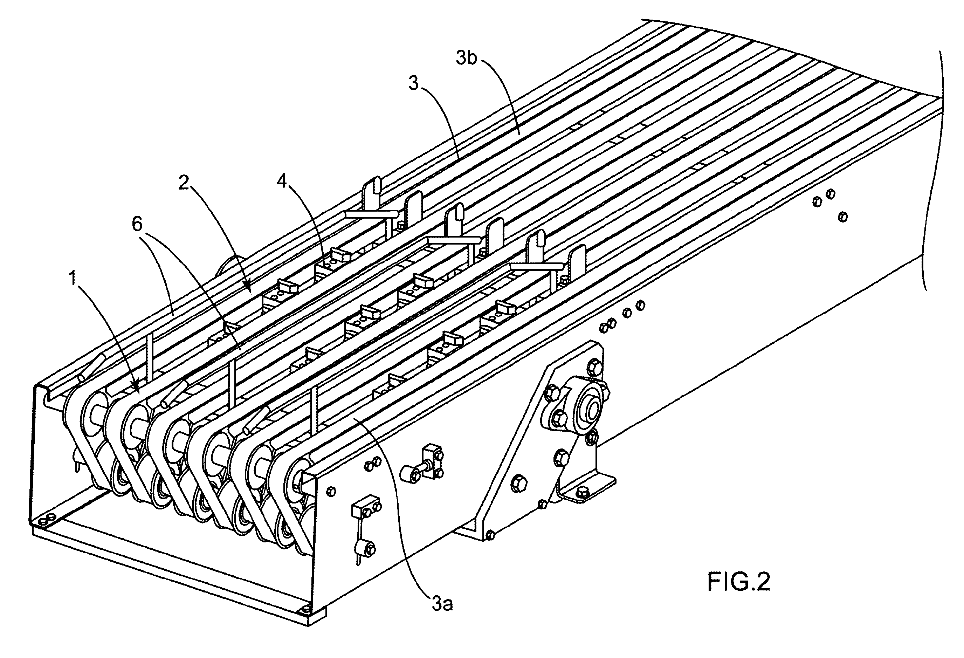

Des rampes de guidage 6, ou analogue, assurent l'alignement exact des plaquettes P par rapport aux moyens convoyeur 3 (figure 2).

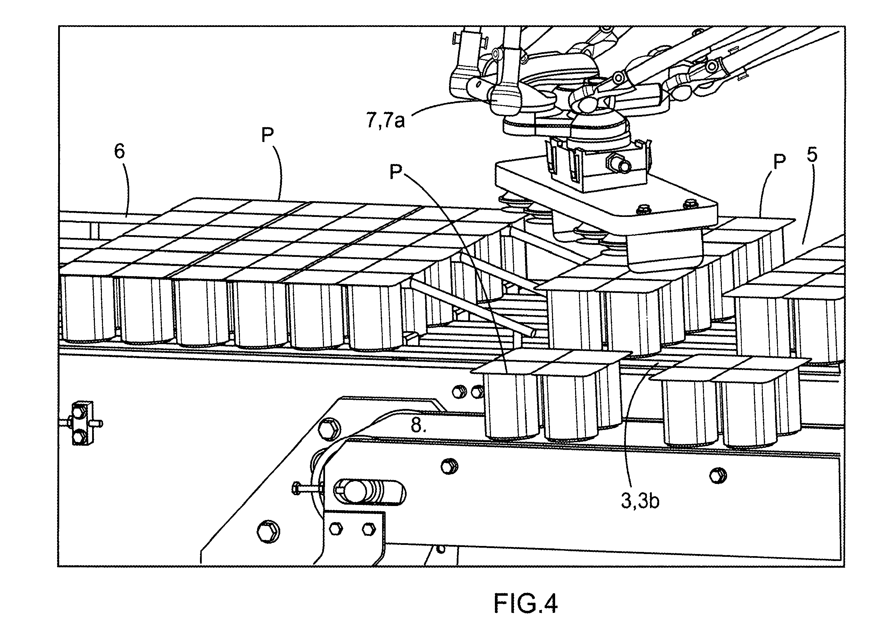

La partie aval 3b des moyens convoyeur 3 est de plus grande longueur que la partie amont 3a et cette longueur est telle que toutes les plaquettes P se trouvant sur cette partie aval 3b pourront être prises par l'un des robots 7, 7a, 7b de manipulation de prise des plaquettes P pour les transférer des moyens convoyeurs 3 vers et sur des moyens convoyeur 8 d'un flux synchronisé des lots L, les articles A, à ce moment étant dépourvus de suremballage F. Ainsi, les robots 7, 7a, 7b constituent en l'espèce des moyens de transfert de toutes les plaquettes P depuis les moyens convoyeur 3 vers et sur les moyens convoyeur 8 (figures 4, 5 et 6).

Il est généralement prévu plusieurs robots de manipulation de prise 7, 7a, 7b disposés le long, au-dessus et à l'aplomb de la partie aval 3b des moyens convoyeur 3, de sorte que toutes les plaquettes P soient in fine prises par les robots 7, 7a, 7b.

Le fonctionnement des robots 7, 7a, 7b est commandé à partir de moyens de commande 9 en fonction des plaquettes P entrant dans la machine et des lots L à réaliser. Il peut leur être associé des moyens de détection de plaquettes, des moyens de vision...

Grâce à l'agencement de la machine, il est possible d'éviter d'être obligé de pourvoir la machine d'un nombre excédentaire de robots 7 pour des raisons de sécurité (prise de toutes les plaquettes P) et l'on est assuré qu'à l'extrémité aval 3c des moyens convoyeur 3, il n'y a plus de plaquettes P qui n'aient pas été prises et transférées par l'un des robots.

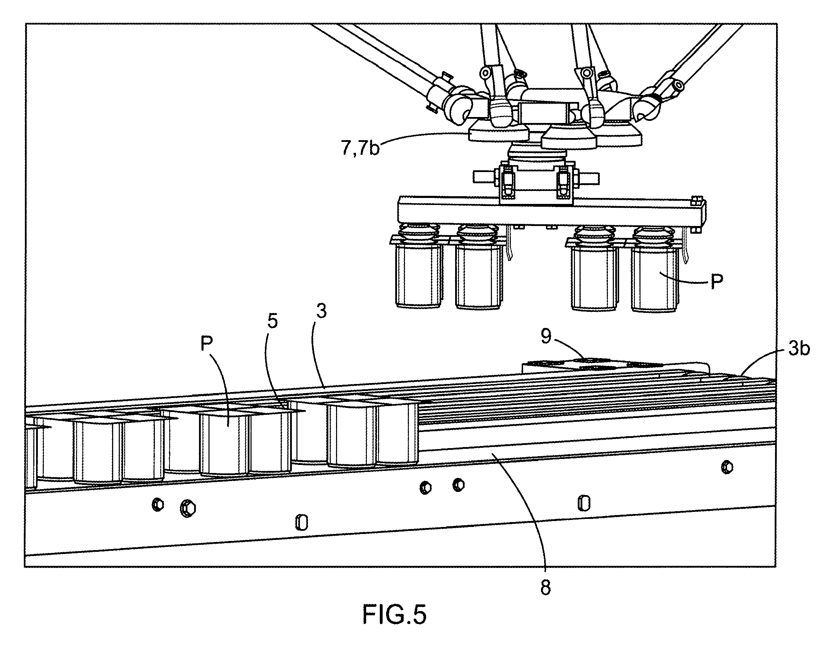

Comme il est représenté sur la figure 5, un robot de manipulation de prise 7, 7a, 7b est agencé avec une tête permettant de prendre simultanément plusieurs plaquettes P simultanément et commandé en conséquence. En variante, la tête du robot 7, 7a, 7b ne prend qu'une seule plaquette P à la fois. Selon les formats de lots L souhaités, les robots 7, 7a, 7b vont ou non disposer plusieurs couches de plaquettes P les unes sur les autres.

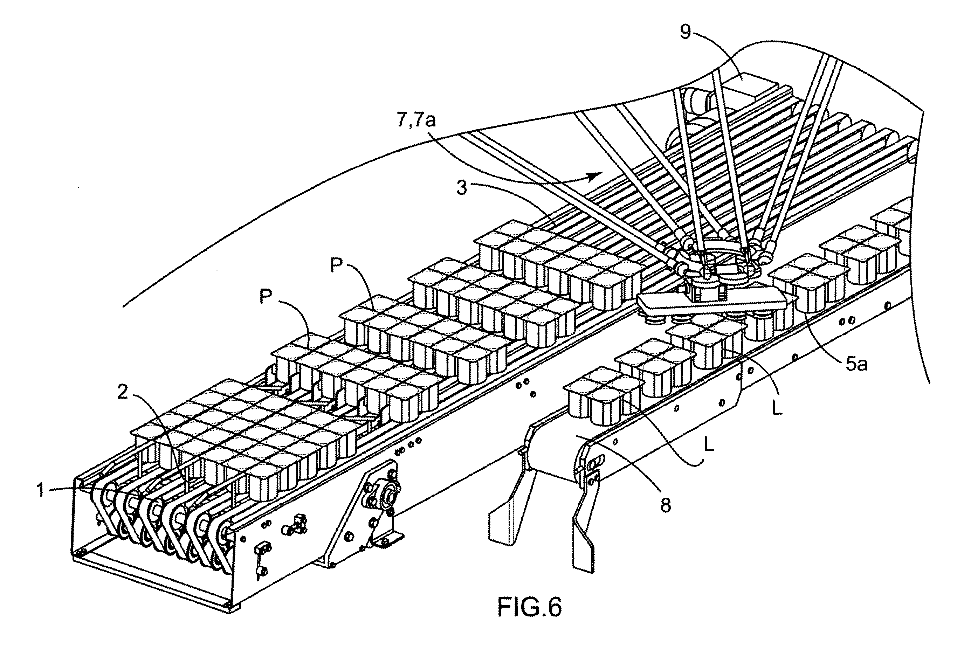

Les moyens convoyeur 3 et les moyens convoyeur 8 sont par exemple des tapis transporteur à bandes disposés côte à côte. Alors que les moyens convoyeur 3 peuvent avoir une largeur transversale apte à recevoir de front plusieurs plaquettes P, la largeur transversale des moyens convoyeur 8 est adaptée pour recevoir de front une unique plaquette P, étant rappelé qu'une plaquette P peut comporter un nombre variables de lignes et de colonnes d'articles A (figures 4 et 6).

En définitive, on a ainsi constitué sur les moyens convoyeur 8 un flux synchronisé de lots L (sans suremballage F bien entendu). Ces lots L se suivent et deux lots L successifs sont séparés par un espace vide 5a qui, comme l'espace vide 5 correspond - aux jeux de fonctionnement près - à la longueur axiale d'un article A.

Par conséquent la machine permet de mettre en oeuvre un procédé dans lequel on règle et on synchronise au pas de la machine les plaquettes P pour former un flux axial synchronisé de plaquettes P, puis on transfère toutes les plaquettes P depuis le flux axial synchronisé de plaquettes P pour constituer un flux axial synchronisé de lots L d'articles, selon le format et la cadence souhaités,

Il se peut néanmoins qu'un pas (longueur axiale correspondant à l'encombrement d'un lot + un espace vide) soit dépourvu de lot L. La machine comporte par conséquent des moyens de contrôle de chaque pas des moyens convoyeur 8 pour détecter la présence ou l'absence d'un lot L. Ces moyens de contrôle sont couplés fonctionnellement à des moyens de commande des moyens de dépilage 10 des flans F et ils responsifs à ces moyens de contrôle.

Les lots L convoyés par les moyens convoyeur 8 sont destinés à être associés à un flan F à plat qui sera ensuite plié et solidarisé sur lui-même.

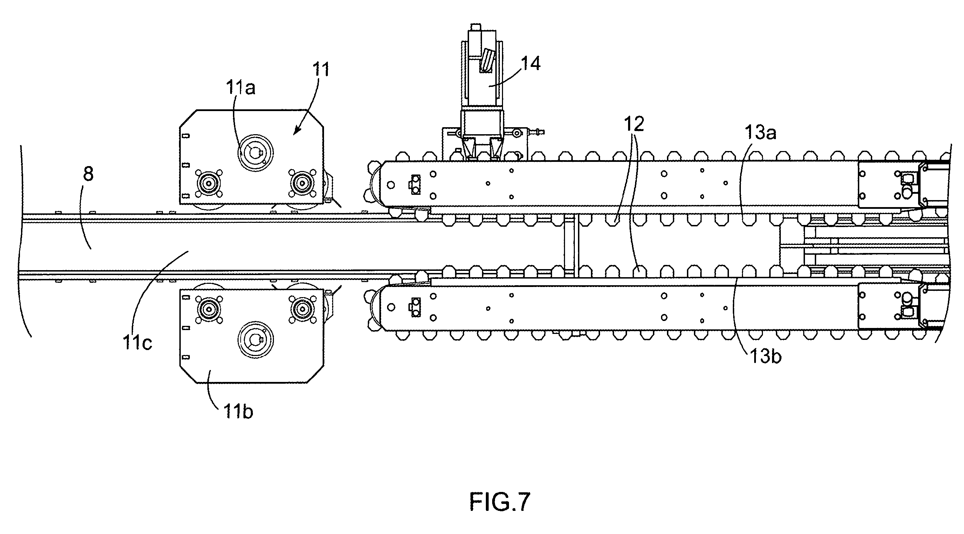

Il se peut que plus loin vers l'aval des moyens convoyeur 8, l'espace vide 5a entre deux lots L successifs ne corresponde plus exactement à la longueur axiale d'un article A, par exemple parce qu'un ou plusieurs lots L ont légèrement glissé par rapport aux moyens convoyeur 8. Aussi, la machine comporte des moyens de recalage fin et final 11 de la synchronisation des lots L (figures 7, 8 et 9). Ces moyens 11 sont par exemple un dispositif dynamique à bielles synchronisé quel que soit le pas de la machine. Un tel dispositif 11 peut comprendre deux ensembles 11a, 11b analogues disposés symétriquement l'un en regard de l'autre en laissant entre eux un couloir 11c à l'aplomb des moyens convoyeur 8. Compte tenu que le nombre d'articles A de front d'une plaquette P peut être variable, l'écartement du couloir central 11c et celui des ensembles 11a et 11b peut être réglé plus ou moins grand ou petit selon les nécessités.

Ainsi, avant de faire coopérer chaque lot L avec chaque flan F, on assure un recalage fin et final axial de la synchronisation des lots L du flux axial synchronisé de lots d'articles.

Vers l'aval des moyens de recalage fin et final 11, il importe que les lots L soient maintenus positivement en vue de l'accostage par-dessous des flans F à plat.

A cet effet, il est prévu que les moyens convoyeur 8 comportent deux ensembles de saillies de positionnement et maintien 12, régulièrement espacées axialement et entraînées axialement aptes à venir prendre les lots L latéralement entre les articles A, ainsi que devant le ou les articles A frontal/frontaux et derrière le ou les articles A arrière des lots L.

Les deux ensembles de saillies 12 sont supportées par deux courroies sans fin 13a, 13b (ou équivalent) disposées parallèlement entre elles et formant un couloir de convoyage 13c, les saillies 12 étant agencées sur les courroies 13a, 13b de manière à être dirigées vers le couloir 13c.

Les courroies sans fin 13a et 13b sont entraînées par des moyens moteurs 14.

Les courroies sans fin 13a, 13b sont elles-mêmes supportées par des moyens porteurs adaptés de manière mobile avec blocage, pour être réglable en écartement transversal, ce qui leur permet de recevoir des formats variés de lots L, en ce qui concerne le nombre d'articles A de front.

Grâce aux moyens de recalage fin et final 11 suivis des courroies 13a, 13b à saillies 12, un lot L d'articles du flux synchronisé de lots L d'articles est positivement maintenu séparé du lot L qui le précède et/ou du lot L qui lui succède d'un espace vide 5c ayant au minimum la longueur axiale d'un article A ou ayant la longueur axiale d'un multiple de la longueur axiale d'un article A.

C'est ainsi que le pas axial de la machine est variable et adapté à la longueur axiale du lot L d'articles à suremballer. Et c'est ainsi que les moyens convoyeur 8 sont adaptés au convoyage de lots L de longueur axiale variable, sans nécessité de réglage.

Comme le dispositif 11, le dispositif comprenant les courroies 13a, 13b avec les saillies 12 peut ménager un couloir central d'écartement réglable plus ou moins grand ou petit selon les nécessités et la longueur transversale les lots L.

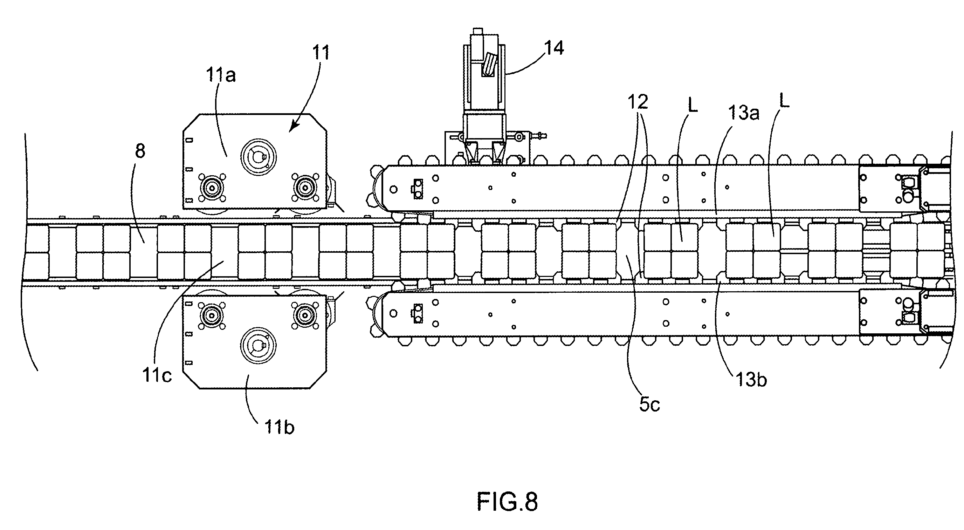

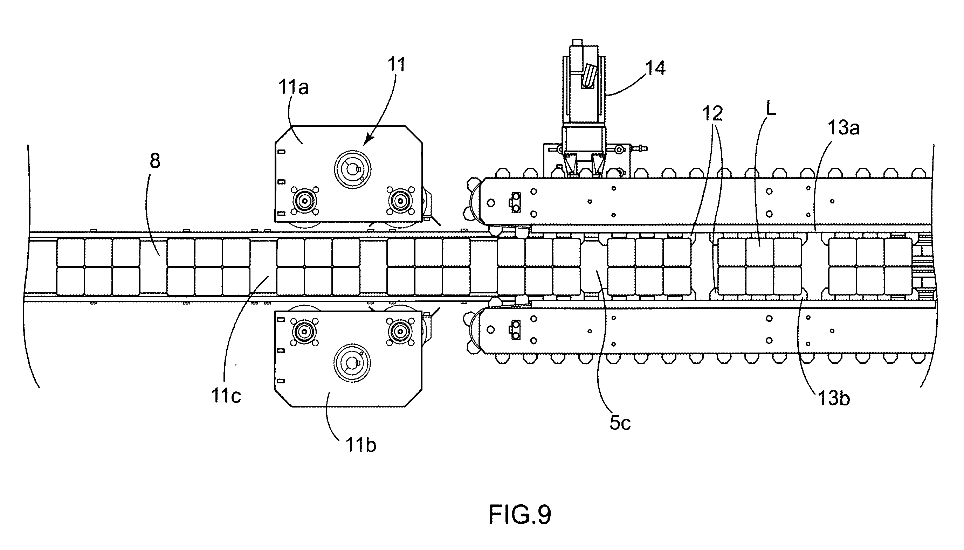

Comme on le voit sur les figures 8 et 9, lorsque l'on procède au suremballage de lots L de longueurs axiales différentes - deux articles A dans le cas de la figure 8b et trois articles A dans le cas de la figure 9 -, les lots adjacents restent toujours séparés par un espace vide 5c, qui est le plus petit espace possible en direction axiale, puisqu'il correspond à la longueur axiale d'un article A.

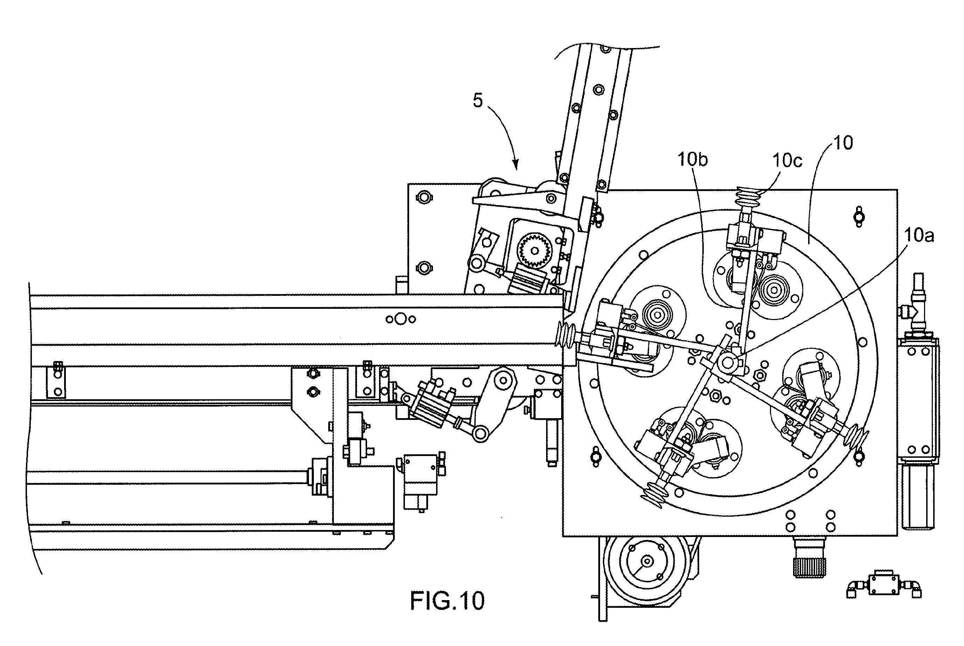

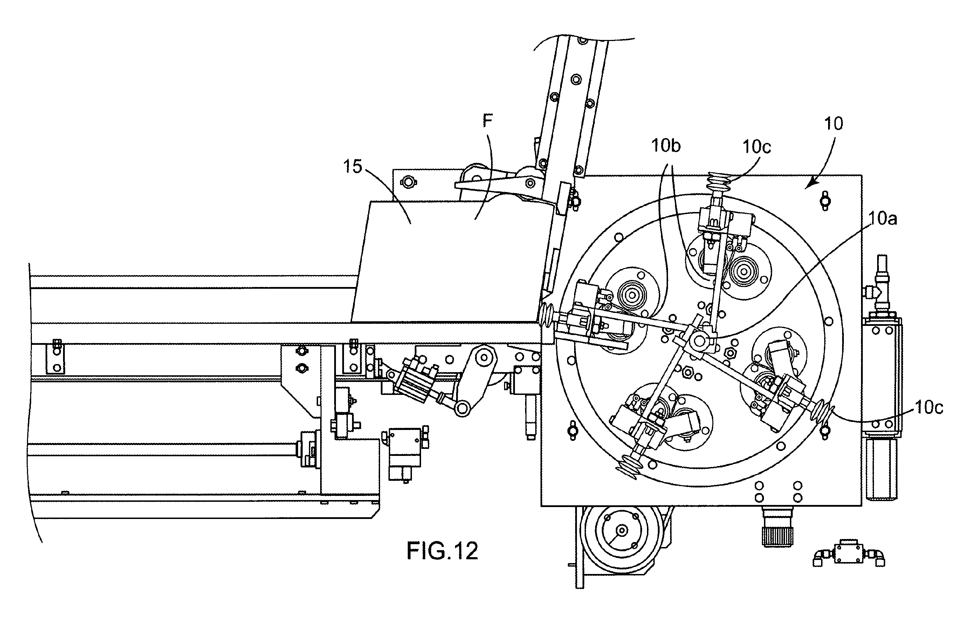

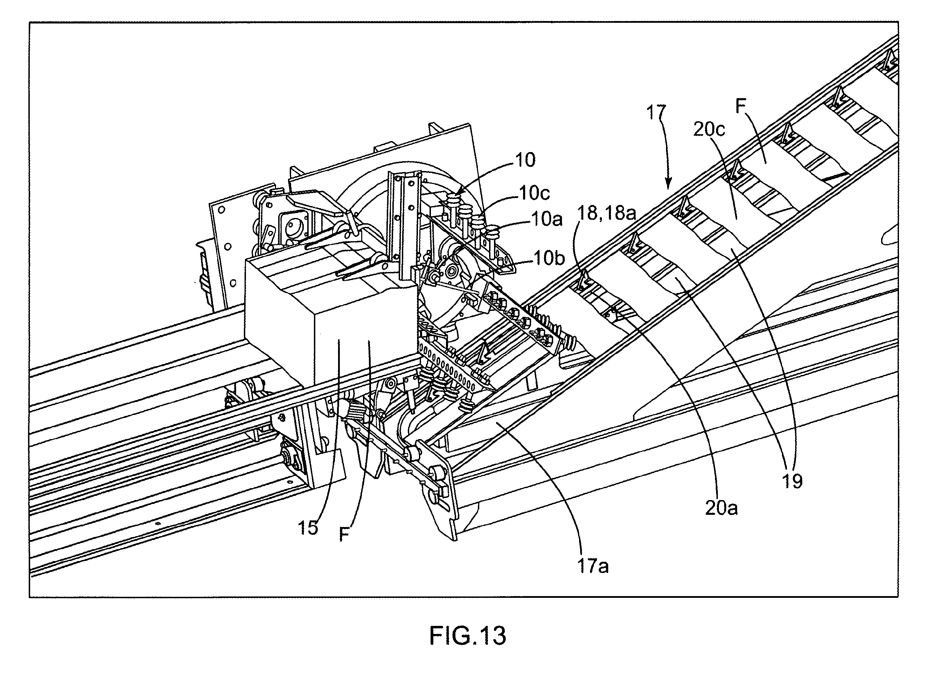

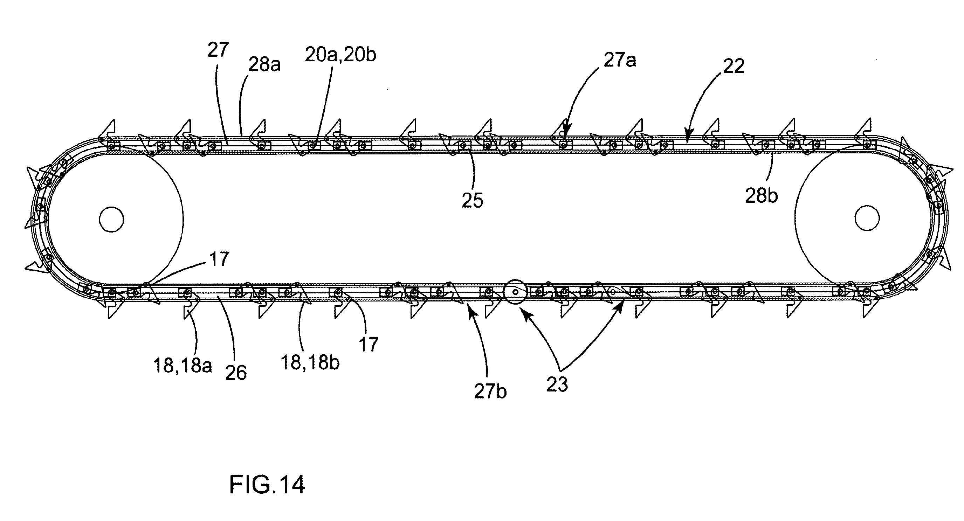

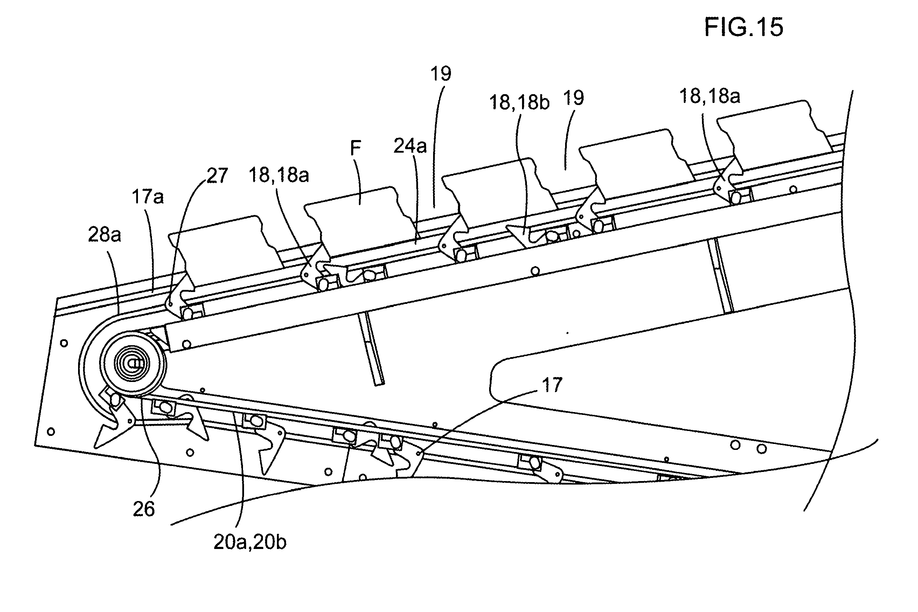

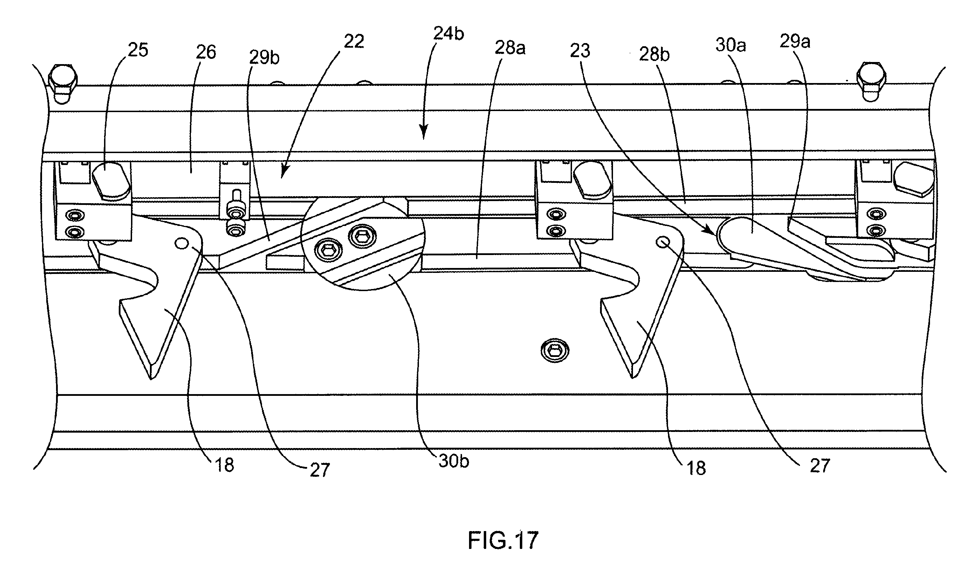

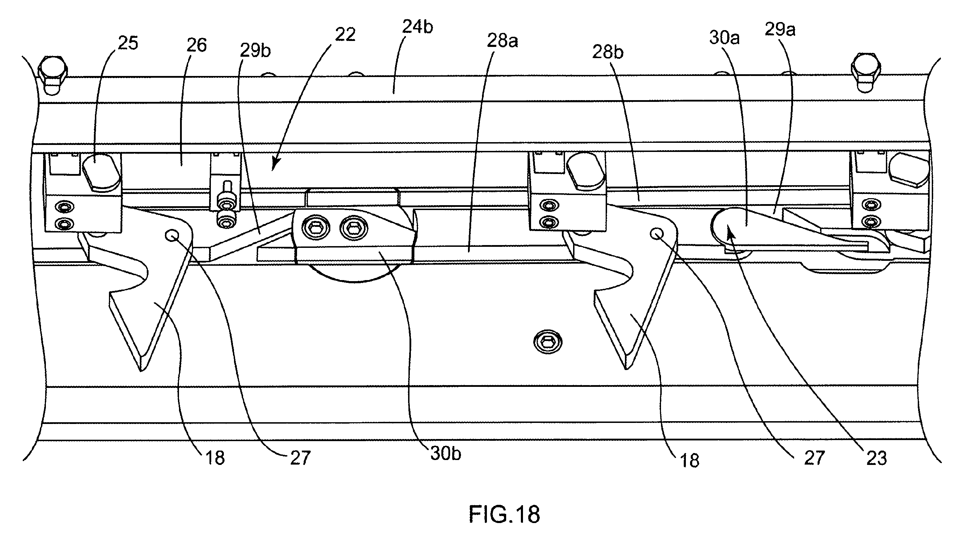

On se réfère maintenant plus spécialement aux figures 10 à 18 concernant le flux des flans F.

La machine comporte un magasin 15 de flans F à plat empilés, situé en partie inférieure, latéralement et au-delà de l'extrémité aval 3c des moyens convoyeur 3 et donc en aval des robots 7, 7a, 7b.

Dans le magasin 15, les flans F sont empilés de manière à ce que le premier flan F à utiliser et donc à dépiler se trouve disposé légèrement incliné sur la verticale, porté par les organes support du magasin 15, vers la sortie du magasin 15.

En aval du magasin 15, se trouvent les moyens de dépilage 10 des flans F à plat un à un, l'un après l'autre.

Dans la réalisation représentée, les moyens de dépilage 10 sont sous la forme d'une roue de dépilage montée à rotation autour d'un axe transversal 10a, supportant une pluralité de - ici quatre - bras radiaux 10b terminés par des ventouses de succion 10c. Des moyens moteurs 16 entraînent la roue de dépilage 10. Avec de tels moyens, les ventouses de succion 10c des bras 10b arrivant successivement vers la sortie du magasin 15 peuvent saisir puis déplacer au fur et à mesure les premiers flans F se présentant en sortie du magasin 15. Bien entendu, cette forme de réalisation des moyens de dépilage n'est qu'exemplative et nullement limitative.

Les flans F ainsi dépilés sont déposés après une rotation d'environ 120° en partie amont inférieure 17a de moyens convoyeur axial 17 d'un flux axial synchronisé de flans F à plat.

Les moyens de dépilage 10 sont commandés en fonction des besoins, ce qui est rendu possible par le fait qu'ils sont placés en aval des robots 7, 7a, 7b.

Comme il a été déjà indiqué, on contrôle chaque pas du flux axial synchronisé de lots d'articles réalisé par les robots 7, 7a, 7b.

Si le pas (du flux de lots L d'articles) comporte un lot d'articles L, on commande le dépilage d'un flan F à plat, c'est-à-dire que l'on commande le fonctionnement des moyens de dépilage 10.

Si, au contraire le pas ne comporte pas de lot L, on ne commande pas le dépilage d'un flan à plat, c'est-à-dire que l'on ne commande pas le fonctionnement des moyens de dépilage 10.

Par suite, on constitue un flux axial synchronisé de lots d'articles et le flux axial synchronisé de flans à plat en correspondance, de manière qu'à un pas comportant un lot L d'articles correspond un pas comportant un flan F à plat et qu'à un pas ne comportant pas un lot L d'articles correspond un pas ne comportant pas un flan F à plat.

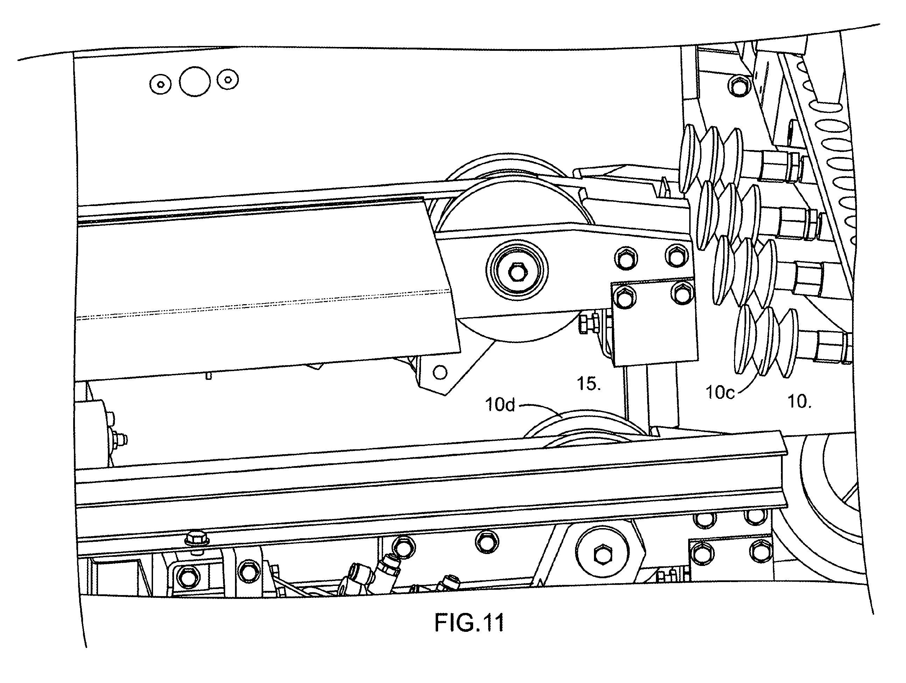

Dans une réalisation avantageuse (figure 11), il est prévu que les moyens de dépilage 10 comportent des moyens 10d aptes à écarter le flan F à dépiler du flan F qui lui succède. Ces moyens 10d comprennent des moyens d'accélération du flan F à dépiler. Par exemple le cheminement axial du flan est augmenté alors que sa vitesse linéaire axiale est la même. Pour ce faire on prévoit que le flan F à dépiler passe sur une saillie 10c.

Les moyens convoyeur 17 sont disposés inclinés du bas vers le haut et de l'amont vers l'aval, au moins pour partie à l'aplomb sous les moyens convoyeur 8. La partie extrême amont 17a des moyens convoyeur 17 est située immédiatement en position basse en aval des moyens de dépilage. La partie extrême aval 17b des moyens convoyeur 17 vient rejoindre par-dessous les moyens convoyeur 8.

Les moyens convoyeur 17 comportent des doigts pousseurs 18 de positionnement et de maintien, régulièrement espacées axialement et escamotables pour qu'un flan F du flux synchronisé de flans à plat soit positivement maintenu séparé du flan F qui le précède et/ou du flan F qui lui succède d'un espace vide axial 19 ayant au minimum la longueur axiale d'un article A ou ayant la longueur axiale d'un multiple de la longueur axiale d'un article A.

Ainsi et comme pour les lots L d'articles A, la machine est aussi, pour les flans F, à pas variable adapté à la longueur du lot L.

Comme pour les lots L, les moyens convoyeur 17 sont adaptés au convoyage de flans F de longueur axiale variable, sans nécessité de réglage.

Comme pour les lots L, les moyens convoyeur 17 sont réglables en écartement transversal, étant par conséquent adaptés au convoyage de flans à plat de longueur transversale variable.

Dans la réalisation représentée, les moyens convoyeur 17 comportent deux courroies sans fin d'entraînement 20a, 20b entraînées par des moyens moteur 21.

Les courroies 20a, 20b sont disposées parallèlement et transversalement entre elles et espacées pour formant un couloir axial de convoyage 20c.

Les courroies 20a, 20b supportant les doigts pousseurs 18.

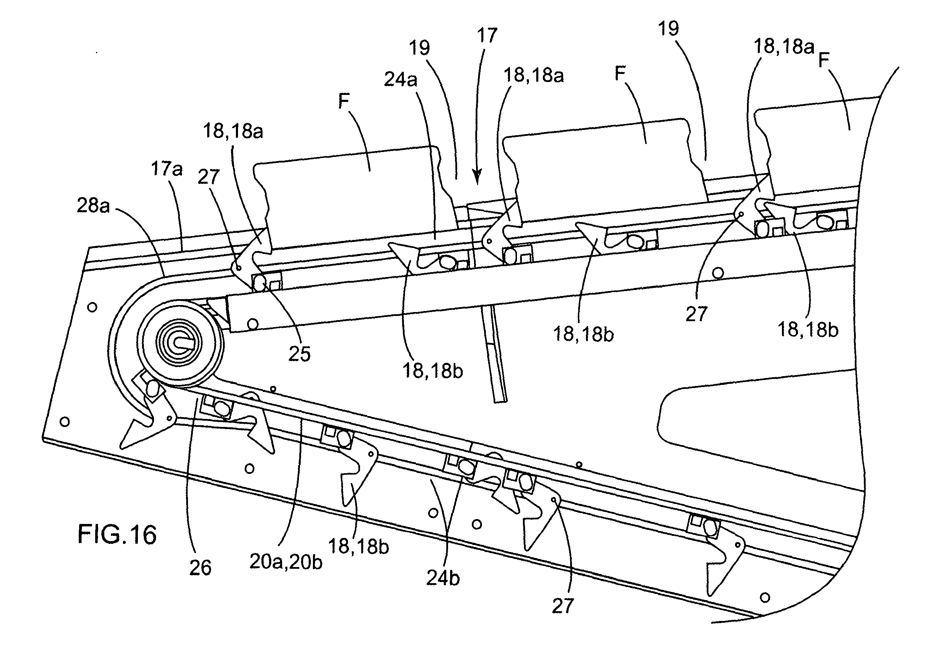

Les doigts pousseurs 18 sont mobiles et blocables en position relative, de manière à être chacun séparément soit en situation saillante active (doigts 18a par exemple sur la figure 16) soit en situation escamotée inactive (doigt 18b par exemple sur la figure 16).

Les moyens convoyeur 17 comprennent également des moyens de guidage 22 et des moyens d'aiguillage 23 des doigts pousseurs 18, successifs. Ainsi, on amène les doigts 18 à se trouver soit dans la situation saillante active soit dans la situation escamotée inactive.

La configuration de la succession des doigts 18 dans les situations en question correspond à la configuration requise pour entraîner les flans F successifs du flux axial synchronisé de flans en correspondance exacte avec le flux axial synchronisé de lots L d'articles. On entend par là que :
- pour chaque lot L, on amène un flan F,
- que dans l'hypothèse où pour un pas donné du flux de lots L, il n'y a pas de lot L, il n'y aura pas non plus de flan F dans le flux de flans,
- que la disposition successive des lots L et la disposition successive des flans F est strictement identique,
- et, enfin, qu'à l'endroit où les moyens convoyeur 8 et les moyens convoyeur 17 se rejoignent (extrémité aval 17b), un lot L vient se placer exactement au dessus, centré à l'aplomb du flan F.

Les moyens convoyeur 17, plus précisément les courroies 20a, 20b comprennent un tronçon de cheminement actif 24a d'amené des doigts 18, où ceux-ci assurent leur fonction de poussée des flans F à plat et un tronçon de cheminement inactif 24b de retour des doigts 18, où ceux-ci n'assurent aucune fonction de poussée des flans F à plat. C'est sur le tronçon de cheminement inactif 24b que se trouvent les moyens 22 de guidage et les moyens 23 d'aiguillage des doigts pousseurs 18. Comme cela résulte des explications qui précèdent, une partie seulement des doigts 18 se trouvant sur le tronçon de cheminement actif 24a sont en situation actifs une autre partie en situation inactive et ce en fonction du format des lots L souhaités.

Selon une réalisation, un doigt pousseur 18 est porté par une pièce d'entraînement axial 25. La pièce d'entraînement axial 25 est elle-même portée par une courroie sans fin 20a, 20b. La pièce d'entraînement 25 est apte à coopérer à coulissement axial avec une glissière de guidage axial 26.

Par ailleurs, le doigt pousseur 18 est monté sur la pièce d'entraînement 25 de façon articulée autour d'un axe transversal 18c, de manière à pouvoir pivoter de façon relative par rapport à la pièce 25 sur une course ayant deux positions de fin de course définissant respectivement les deux situations saillante active et escamotée inactive.

Le doigt pousseur 18 comporte en outre latéralement un téton de commande 27 dirigé transversalement et écarté de l'axe de pivotement 18c.

Un téton de commande 27 coopère avec l'une de deux glissières de guidage axial de téton 28a, 28b. Ces glissières 28a, 28b sont disposées parallèlement entre elles et à la glissière de guidage 26 de la pièce d'entraînement 25.

Le téton de commande 27 lorsqu'il est dans la glissière de guidage 28a se trouve dans la situation saillante active. Lorsqu'il est dans la glissière de guidage 28b, il est dans la situation escamotée inactive.

Les moyens d'aiguillage 23 comprennent deux dérivations de guidage 29a, 29b espacés l'une de l'autre axialement et reliant les deux glissières de guidage 28a, 28b. Ils comprennent en outre deux pièces d'orientation 30a, 30b mobile, associées aux deux dérivations 29a, 29b. Ces pièces d'orientation 30a, 30b sont commandées de manière adaptée à commander le guidage du téton 27 pour qu'il reste dans la glissière de guidage 28a, 28b où il se trouvait ou, au contraire, qu'il soit orienté vers l'autre glissière 28b, 28a.

La machine comporte également des moyens de coopération de chaque lot L constitué avec chaque flan F à plat, le flan F venant par-dessous le lot L.

En aval, la machine comporte des moyens pour plier le flan F autour du lot L d'articles et pour le solidariser sur lui-même.

Enfin, vers l'aval, la machine comporte des moyens d'évacuation axiale du flux axial sortant des lots d'articles suremballés.

## Revendications

1. Procédé de suremballage, dans un flan (F) de suremballage, d'articles (A) agencés en plaquettes (P) comportant chacune une pluralité d'articles (A) de même longueur dans la direction de défilement, disposés en une ou plusieurs colonnes et/ou une ou plusieurs lignes, pour former des lots (L) d'articles (A) agencés en une ou plusieurs couches de plaquettes (P) et comportant un suremballage périphérique, dans lequel, de façon dynamique :
- on dispose d'un flux axial aléatoire entrant de plaquettes (P) d'articles (A) et on constitue des lots (L) d'articles,
- on dispose d'une pile de flans (F) de suremballage à plat et on dépile les flans (F) successivement,
- on fait coopérer successivement chaque lot d'articles (A) constitué avec chaque flan (F) à plat dépilé, puis on plie le flan (F) autour du lot d'articles (A) et on le solidarise sur lui-même,
- on évacue le flux axial sortant des lots (L) d'articles (A) suremballés,
- les lots (L) d'articles (A) suremballés comportant un nombre d'articles (A) par plaquette, une disposition des articles (A) sur chaque plaquette et un nombre de plaquettes (P) empilées variable en fonction du format des lots (L) souhaités,
**caractérisé par le fait que** :
- on règle et on synchronise au pas de la machine les plaquettes (P) d'articles (A) du flux axial entrant pour former un flux axial synchronisé de plaquettes (P) d'articles (A),
- on transfère toutes les plaquettes (P) d'articles (A) depuis le flux axial synchronisé de plaquettes (P) d'articles (A) pour constituer un flux axial synchronisé de lots (L) d'articles (A), selon le format et la cadence souhaités,
- chaque lot d'articles (A) du flux axial synchronisé de lots (L) d'articles (A) est ainsi séparé axialement du lot d'articles (A) qui le précède et/ou du lot d'articles (A) qui lui succède d'un espace vide axial (5a, 5c) ayant la longueur axiale d'un article (A) ou d'un multiple de la longueur axiale d'un article (A), le pas axial de la machine étant ainsi variable et adapté à la longueur axiale du lot d'articles (A),
- puis, on dépile les flans (F) à plat à la demande en fonction des plaquettes (P) d'articles (A) ainsi transférées pour constituer un flux axial synchronisé de flans (F) à plat correspondant exactement au flux axial synchronisé de lots (L) d'articles (A),
- chaque flan (F) du flux axial synchronisé de flans (F) à plat est ainsi séparé du flan (F) qui le précède et/ou du flan (F) qui lui succède d'un espace vide axial (19) ayant la longueur axiale d'un article (A) ou d'un multiple de la longueur axiale d'un article (A),
- à partir du flux axial synchronisé de lots (L) d'articles (A) et du flux axial synchronisé de flans (F) à plat, on fait coopérer successivement chaque lot d'articles (A) avec chaque flan (F) à plat avant que plier le flan (F) autour du lot d'articles (A) et de le solidariser sur lui-même.

2. Procédé selon la revendication 1, **caractérisé par le fait qu'**avant de faire coopérer chaque lot d'articles (A) du flux axial synchronisé de lots (L) d'articles (A) avec chaque flan (F) à plat du flux axial synchronisé de flans (F) à plat, on assure un recalage fin et final axial de la synchronisation des plaquettes (P) d'articles (A) du flux axial synchronisé de plaquettes (P) d'articles (A).

3. Procédé selon l'une quelconque des revendications 1 et 2, **caractérisé par le fait que** l'on transfère toutes les plaquettes (P) d'articles (A) depuis le flux synchronisé de plaquettes (P) d'articles (A) pour constituer un flux axial synchronisé de lots (L) d'articles (A), selon le format et la cadence souhaités, par une manipulation de prise robotisée.

4. Procédé selon l'une quelconque des revendications 1 à 3, **caractérisé par le fait que** l'on transfère toutes les plaquettes (P) d'articles (A) depuis le flux axial synchronisé de plaquettes (P) d'articles (A) pour constituer un flux axial synchronisé de lots (L) d'articles (A), selon le format et la cadence souhaités, par une manipulation de prise d'une seule plaquette (P) à la fois ou de plusieurs plaquettes (P) simultanément.

5. Procédé selon l'une quelconque des revendications 1 à 4, **caractérisé par le fait que** :
- on contrôle chaque pas du flux axial synchronisé de lots (L) d'articles (A),
- si le pas comporte un lot (L) d'articles (A), on commande le dépilage d'un flan (F) à plat,
- si le pas ne comporte pas de lot (L) d'articles (A), on ne commande pas le dépilage d'un flan (F) à plat,
- et on fait coopérer le flux axial synchronisé de lots (L) d'articles (A) et le flux axial synchronisé de flans (F) à plat, de manière qu'à un pas comportant un lot d'articles (A) correspond un pas comportant un flan (F) à plat et qu'à un pas ne comportant pas un lot d'articles (A) correspond un pas ne comportant pas un flan (F) à plat.

6. Procédé selon l'une quelconque des revendications 1 à 5, **caractérisé par le fait que** pour constituer un flux axial synchronisé de flans (F) à plat dans lequel chaque flan (F) du flux est séparé du flan (F) qui le précède et/ou du flan (F) qui lui succède d'un espace vide axial (19) ayant la longueur axiale d'un article (A) ou d'un multiple de la longueur axiale d'un article (A), on pousse chaque flan (F) à plat du flux axial synchronisé de flans (F) à plat au moyen de doigts (18) pousseurs d'entrainement régulièrement espacées axialement et agencées pour être soit en situation saillante active soit en situation escamotée inactive, on guide et on aiguille les doigts pousseurs (18) successifs pour qu'ils se trouvent dans la situation saillante active ou dans la situation escamotée inactive correspondant à la configuration requise pour entraîner les flans (F) à plat successifs du flux axial synchronisé de flans (F) à plat en correspondance avec le flux axial synchronisé de lots (L) d'articles.

7. Procédé selon la revendication 6, **caractérisé par le fait que** dans un mode réglage de pas du flux axial synchronisé de flans (F) à plat :
- dans un tronçon de cheminement inactif (24b) de retour des doigts pousseurs (18) où les doigts pousseurs (18) n'assurent aucune fonction de poussée des flans (F) à plat, on aiguille les doigts pousseurs (18) successifs pour les amener à se trouver dans la situation saillante active ou dans la situation escamotée inactive de manière à définir une configuration de doigts pousseurs (18) successifs correspondant à la configuration requise pour entraîner les flans (F) à plat successifs du flux axial synchronisé de flans (F) à plat en correspondance avec le flux axial synchronisé de lots (L) d'articles (A),
- une fois les doigts pousseurs (18) ainsi aiguillés et amenés dans la situation saillante active ou dans la situation escamotée inactive requise, on guide les doigts pousseurs (18) en déplacement en les maintenant leur situation saillante active ou escamotée inactive, y compris dans un tronçon de cheminement actif (24a) d'amené des doigts pousseurs (18) où les doigts pousseurs (18) assurent leur fonction de poussée des flans (F) à plat.

8. Procédé selon l'une quelconque des revendications 6 et 7, **caractérisé par le fait que** dans un mode de production, sans réglage de pas du flux axial synchronisé de flans (F) à plat, on guide les doigts pousseurs (18) en déplacement en les maintenant leur situation saillante active ou escamotée inactive correspondant à la configuration requise pour entraîner les flans (F) à plat successifs du flux axial synchronisé de flans (F) à plat en correspondance avec le flux axial synchronisé de lots (L) d'articles (A), dans un tronçon de cheminement inactif de retour (24b) des doigts pousseurs (18) où les doigts pousseurs (18) n'assurent aucune fonction de poussée des flans (F) à plat et dans un tronçon de cheminement actif d'amené (24a) des doigts pousseurs (18) où les doigts pousseurs (18) assurent leur fonction de poussée des flans (F) à plat.

9. Procédé selon l'une quelconque des revendications 1 à 8, **caractérisé par le fait que** lors du dépilage des flans (F), on écarte le flan (F) à dépiler du flan (F) qui lui succède en accélérant le flan (F) à dépiler.

10. Machine de suremballage, dans un flan (F) de suremballage, d'articles (A) agencés en plaquettes (P) comportant chacune une pluralité d'articles (A) de même longueur dans la direction de défilement, disposés en une ou plusieurs colonnes et/ou une ou plusieurs lignes, pour former des lots (L) d'articles (A) agencés en une ou plusieurs couches de plaquettes (P) et comportant un suremballage périphérique, pour la mise en oeuvre du procédé selon l'une quelconque des revendications 1 à 9, qui comporte :
- vers l'amont, des moyens (1) d'amenée axiale d'un flux axial aléatoire entrant de plaquettes (P) d'articles (A) et des moyens de constitution des lots (L) d'articles,
- vers l'amont, des moyens pour former une pile de flans (F) de suremballage à plat et des moyens (10) de dépilage des flans (F) successivement,
- vers l'aval des moyens de constitution des lots (L) d'articles (A) et des moyens (10) de dépilage des flans (F), des moyens de coopération de chaque lot d'articles (A) constitué avec chaque flan (F) à plat dépilé et, en aval, des moyens pour plier le flan (F) autour du lot d'articles (A) et pour le solidariser sur lui-même,
- vers l'aval, des moyens d'évacuation axiale du flux axial sortant des lots (L) d'articles (A) suremballés, **caractérisée par le fait qu'**elle comporte :
- vers l'amont, des moyens (2) de réglage et des moyens de synchronisation au pas de la machine les plaquettes (P) d'articles (A) du flux entrant, suivis de moyens convoyeur axial d'un flux axial (3) synchronisé de plaquettes (P) d'articles (A),
- des moyens (7) de transfert de toutes les plaquettes (P) d'articles (A) depuis les moyens convoyeur axial (3) du flux axial synchronisé de plaquettes (P) d'articles (A) vers des moyens convoyeur axial (8) d'un flux axial synchronisé de lots (L) d'articles (A), selon le format et la cadence souhaités,
- des moyens (10) de dépilage des flans (F) à plat à la demande responsifs aux moyens (7) de transfert des plaquettes (P) d'articles, suivis de moyens convoyeur axial d'un flux axial (17) synchronisé de flans (F) à plat en correspondance avec les moyens convoyeur axial (8) du flux axial synchronisé de lots (L) d'articles (A),
- en aval des moyens convoyeur axial (8) du flux axial synchronisé de lots (L) d'articles (A) et des moyens convoyeur axial (17) du flux axial synchronisé de flans (F) à plat, des moyens de coopération successivement de chaque lot d'articles (A) avec chaque flan (F) à plat et, en aval, des moyens pour plier le flan (F) autour du lot d'articles (A) et pour le solidariser sur lui-même.

11. Machine de suremballage selon la revendication 10, **caractérisée par le fait que** les moyens convoyeur axial (8) d'un flux axial synchronisé de lots (L) d'articles (A) comporte des saillies (12) de positionnement et maintien régulièrement espacées axialement pour qu'un lot d'articles (A) du flux synchronisé de lots (L) d'articles (A) soit positivement maintenu séparé du lot d'articles (A) qui le précède et/ou du lot d'articles (A) qui lui succède d'un espace vide axial (5c) ayant au minimum la longueur axiale d'un article (A) ou ayant la longueur axiale d'un multiple de la longueur axiale d'un article (A), le pas axial de la machine étant ainsi variable et adapté à la longueur du lot d'articles, les moyens convoyeur axial d'un flux axial synchronisé de lots (L) d'articles (A) étant adaptés au convoyage de lots (L) d'articles (A) de longueur axiale variable, sans nécessité de réglage.

12. Machine de suremballage selon l'une quelconque des revendications 10 et 11, **caractérisée par le fait que** les moyens convoyeur axial (8) d'un flux axial synchronisé de lots (L) d'articles (A) est réglable en écartement transversal, les moyens convoyeur axial (8) d'un flux axial synchronisé de lots (L) d'articles (A) étant adaptés au convoyage de lots (L) d'articles (A) de longueur transversale variable.

13. Machine de suremballage selon l'une quelconque des revendications 10 à 12, **caractérisée par le fait que** les moyens convoyeur axial (17) d'un flux axial synchronisé de flans (F) à plat comportent des doigts pousseurs (18) de positionnement et maintien régulièrement espacées axialement et escamotables pour qu'un flan (F) à plat du flux synchronisé de flan (F) à plat soit positivement maintenu séparé du flan (F) à plat qui le précède et/ou du flan (F) à plat qui lui succède d'un espace vide axial (19) ayant au minimum la longueur axiale d'un article (A) ou ayant la longueur axiale d'un multiple de la longueur axiale d'un article (A), le pas axial de la machine étant ainsi variable et adapté à la longueur du lot (L) d'articles (A), les moyens convoyeur axial (17) d'un flux axial synchronisé de flans (F) étant adaptés au convoyage de flans (F) de longueur axiale variable, sans nécessité de réglage.

14. Machine de suremballage selon l'une quelconque des revendications 10 à 13, **caractérisée par le fait que** les moyens convoyeur axial (17) d'un flux axial synchronisé de flans (F) à plat est réglable en écartement transversal, les moyens convoyeur axial (17) d'un flux axial synchronisé de flans (F) à plat étant adaptés au convoyage de flans (F) à plat de longueur transversale variable.

15. Machine de suremballage selon l'une quelconque des revendications 10 à 14, **caractérisée par le fait qu'**elle comporte en amont des moyens de coopération de chaque lot d'articles (A) du flux axial synchronisé de lots (L) d'articles (A) avec chaque flan (F) à plat du flux axial synchronisé de flans (F) à plat, de moyens (11) de recalage fin et final de la synchronisation des plaquettes (P) d'articles (A) du flux axial synchronisé de plaquettes (P) d'articles.

16. Machine de suremballage selon l'une quelconque des revendications 10 à 15, **caractérisée par le fait que** les moyens (7) de transfert de toutes les plaquettes (P) d'articles (A) depuis les moyens convoyeur axial du flux axial synchronisé de plaquettes (P) d'articles (A) vers des moyens convoyeur axial d'un flux axial synchronisé de lots (L) d'articles (A), selon le format et la cadence souhaités, comprennent un ou plusieurs robots (7a, 7b) de manipulation de prise.

17. Machine de suremballage selon l'une quelconque des revendications 10 à 16, **caractérisée par le fait que** les moyens (7) de transfert de toutes les plaquettes (P) d'articles (A) depuis les moyens convoyeur axial (3) du flux axial synchronisé de plaquettes (P) d'articles (A) vers des moyens convoyeur axial (8) d'un flux axial synchronisé de lots (L) d'articles (A), selon le format et la cadence souhaités, comprennent des moyens (7) de manipulation de prise d'une seule plaquette (P) à la fois ou de plusieurs plaquettes (P) simultanément.

18. Machine de suremballage selon l'une quelconque des revendications 10 à 17, **caractérisée par le fait qu'**elle comporte des moyens de contrôle de chaque pas des moyens convoyeur axial (8) du flux axial synchronisé de lots (L) d'articles (A) pour détecter la présence ou l'absence d'un lot d'articles (A) et des moyens de commande des moyens (10) de dépilage responsifs à ces moyens de contrôle.

19. Machine de suremballage selon l'une quelconque des revendications 10 à 18, **caractérisée par le fait que** les moyens (2) de réglage et les moyens de synchronisation au pas de la machine des plaquettes (P) d'articles (A) du flux entrant comprennent la partie amont (3a) des moyens convoyeur axial (3) d'un flux axial synchronisé de plaquettes (P) d'articles (A) à laquelle sont associés des organes escamotables (4) de blocage aval des plaquettes (P) d'articles (A) se déplaçant axialement à une vitesse plus faible que celle des moyens convoyeur axial d'un flux axial synchronisé de plaquettes (P) d'articles.

20. Machine de suremballage selon l'une quelconque des revendications 10 à 19, **caractérisée par le fait que** la partie aval des moyens convoyeur axial (3) du flux axial synchronisé de plaquettes (P) d'articles (A) est d'une longueur suffisante apte à ce que toutes les plaquettes (P) qu'ils reçoivent puisent être transférées par les moyens (7) de transfert vers les moyens convoyeur axial (8) d'un flux axial synchronisé des lots (L) d'articles (A).

21. Machine de suremballage selon l'une quelconque des revendications 10 à 20, **caractérisée par le fait que** les moyens convoyeur axial (3) du flux axial synchronisé de plaquettes (P) d'articles (A) et les moyens convoyeur axial (8) du flux axial synchronisé des lots (L) d'articles (A) sont disposés côte à côte.

22. Machine de suremballage selon l'une quelconque des revendications 10 à 21, **caractérisée par le fait que** les moyens convoyeur axial (2) du flux axial synchronisé de plaquettes (P) d'articles (A) ont une largeur transversale apte à recevoir une pluralité de plaquettes (P) d'articles (A).

23. Machine de suremballage selon l'une quelconque des revendications 10 à 22, **caractérisée par le fait que** les moyens convoyeur axial (8) du flux axial synchronisé des lots (L) d'articles (A) ont une largeur transversale apte à recevoir une unique plaquette (P) d'articles (A).

24. Machine de suremballage selon l'une quelconque des revendications 11 à 23 en ce qu'elles dépendent des revendications 11 et 12, **caractérisée par le fait que** les moyens convoyeur axial (8) d'un flux axial synchronisé de lots (L) d'articles (A) se présentent sous la forme de deux courroies sans fin (13a, 13b) disposées parallèlement entre elles et formant un couloir de convoyage (13c), supportant des saillies (12) de positionnement et maintien régulièrement espacées axialement, agencées pour être dirigées vers le couloir (13c), les deux courroies (13a, 13b) étant portées par des moyens porteurs de manière mobile avec blocage, pour être réglable en écartement transversal.

25. Machine de suremballage selon l'une quelconque des revendications 13 à 24 en ce qu'elles dépendent des revendications 13 et 14, **caractérisée par le fait que** les moyens convoyeur axial (17) d'un flux axial synchronisé de flans (F) à plat se présentent sous la forme de deux courroies sans fin (20a, 29b) d'entraînement, disposées parallèlement entre elles en formant un couloir de convoyage(20c), supportant des doigts pousseurs (18) de positionnement et d'entraînement régulièrement espacées axialement, agencées mobiles et blocables en position de manière à être chacun séparément soit en situation saillante active soit en situation escamotée inactive, et comprennent des moyens (22) de guidage et des moyens (23) d'aiguillage des doigts pousseurs (18) successifs aptes à ce qu'ils se trouvent dans la situation saillante active ou dans la situation escamotée inactive correspondant à la configuration requise pour entraîner les flans (F) à plat successifs du flux axial synchronisé de flans (F) à plat en correspondance avec le flux axial synchronisé de lots (L) d'articles (A).

26. Machine de suremballage selon la revendication 25, **caractérisée par le fait que** les moyens convoyeur axial (17) d'un flux axial synchronisé de flans (F) à plat comprennent un tronçon de cheminement actif (24a) d'amené des doigts pousseurs (18) où les doigts pousseurs (18) assurent leur fonction de poussée des flans (F) à plat et un tronçon de cheminement inactif (24b) de retour des doigts pousseurs (18) où les doigts pousseurs (18) n'assurent aucune fonction de poussée des flans (F) à plat, tronçon sur lequel se trouvent les moyens (22) de guidage et les moyens (23) d'aiguillage des doigts pousseurs (18).

27. Machine de suremballage selon l'une quelconque des revendications 25 et 26, **caractérisée par le fait qu'**un doigt pousseur (18) est porté par une pièce d'entraînement axial (25) portée par une courroie sans fin (20a, 20b), la pièce d'entraînement axial (25) étant apte à coopérer à coulissement axial avec une glissière de guidage axial (26), le doigt pousseur (18) étant monté sur la pièce d'entraînement axial (25) de façon articulée autour d'un axe transversal (18c) pour pouvoir pivoter de façon relative sur une course ayant deux positions de fin de course définissant les deux situations saillante active et escamotée inactive, le doigt pousseur (18) comportant latéralement un téton de commande (27) dirigé transversalement et écarté de l'axe de pivotement (18c), coopérant avec l'une de deux glissières de guidage axial de téton (28a, 28b), disposées parallèlement entre elles et à la glissière de guidage axial (26) de la pièce d'entraînement (25), le téton (27) étant dans l'une de deux glissières de guidage axial de téton (28a) dans la situation saillante active et étant dans l'autre (28b) des deux glissières de guidage axial de téton (28a, 28b) dans la situation escamotée inactive.

28. Machine de suremballage selon la revendication 27, **caractérisée par le fait que** les moyens (23) d'aiguillage comprennent une dérivation de guidage (29a, 29b) reliant les deux glissières de guidage axial de téton (28a, 28b) et une pièce d'orientation mobile (30a, 30b) commandée apte à commander le guidage du téton (27) pour qu'il reste dans la glissière de guidage axial de téton (28a, 28b) où il se trouvait ou qu'il soit orienté vers l'autre glissières de guidage axial de téton (28b, 28a).

29. Machine de suremballage selon l'une quelconque des revendications 10 à 28, **caractérisé par le fait que** les moyens (10) de dépilage comportent des moyens (10d) aptes à écarter le flan (F) à dépiler du flan (F) qui lui succède comprenant des moyens d'accélération du flan (F) à dépiler.

## Claims

1. A method for the exterior packaging, in an exterior packaging blank (F), of articles (A) arranged in blocks (P) each comprising a plurality of articles (A) of the same length in the direction of travel, arranged in one or more columns and/or one or more rows, to form batches (L) of articles (A) arranged in one or more layers of blocks (P) and comprising a peripheral exterior packaging, in which, dynamically:
- an incoming random axial flow of blocks (P) of articles (A) is arranged and batches (L) of articles are made up,
- a stack of exterior packaging blanks (F) is arranged flat and the blanks (F) are successively unstacked,
- each batch of articles (A) made up is made to cooperate with each unstacked flat blank (F), and then the blank (F) is folded around the batch of articles (A) and is secured on itself,
- the outgoing axial flow of batches (L) of exterior packaged articles (A) is discharged,
- the batches (L) of exterior packaged articles (A) comprising a number of articles (A) per block, an arrangement of the articles (A) on each block and a number of stacked blocks (P) according to the format of the required batches (L),
**characterised by** the fact that:
- the blocks (P) of articles (A) in the incoming axial flow are adjusted and synchronised to the pitch of the machine in order to form a synchronised axial flow of blocks (P) of articles (A),
- all the blocks (P) of articles (A) are transferred from the synchronised axial flow of blocks (P) of articles (A) in order to constitute a synchronised axial flow of batches (L) of articles (A) according to the required format and rhythm,
- each batch of articles (A) in the synchronised axial flow of batches (L) of articles (A) is thus separated axially from the batch of articles (A) that precedes it and/or from the batch of articles (A) that follows it by an axial empty space (5a, 5c) having the axial length of one article (A) or a multiple of the axial length of one article (A), the axial pitch of the machine thus being variable and adapted to the axial length of the batch of articles (A),
- then the blanks (F) are unstacked flat on demand according to the blocks (P) of articles (A) thus transferred in order to constitute a synchronised axial flow of flat blanks (F) corresponding exactly to the synchronised axial flow of batches (L) of articles (A),
- each blank (F) in the synchronised axial flow of flat blanks (F) is thus separated from the blank (F) that precedes it and/or from the blank (F) that follows it by an axial empty space (19) having the axial length of one article (A) or a multiple of the axial length of one article (A),
- from the synchronised axial flow of batches (L) of articles (A) and the synchronised axial flow of flat blanks (F), each batch of articles (A) is made to cooperate successively with each flat blank (F) before folding the blank (F) around the batch of articles (A) and securing it on itself.

2. A method according to claim 1, **characterised by** the fact that, before making each batch of article (A) in the synchronised axial flow of batches (L) of articles (A) cooperate with each flat blank (F) in the synchronised axial flow of flat blanks (F), a final fine axial readjustment of the synchronisation of the blocks (P) of articles (A) in the synchronised axial flow of blocks (P) of articles (A) is made.

3. A method according to either one of claims 1 and 2, **characterised by** the fact that all the blocks (P) of articles (A) are transferred from the synchronised flow of blocks (P) of articles (A) in order to constitute a synchronised axial flow of batches (L) of articles (A), according to the required format and rhythm, by a robotic gripping manipulation.

4. A method according to any one of claims 1 to 3, **characterised by** the fact that all the blocks (P) of articles (A) are transferred from the synchronised axial flow of blocks (P) of articles (A) in order to constitute a synchronised axial flow of batches (L) of articles (A), according to the required format and rhythm, by a gripping manipulation of a single block (P) at a time or of several blocks (P) simultaneously.

5. A method according to any one of claims 1 to 4, **characterised by** the fact that:
- each step of the synchronised axial flow of batches (L) of articles (A) is monitored,
- if the step includes a batch (L) of articles (A), the unstacking of a flat blank (F) is demanded,
- if the step does not include a batch (L) of articles (A), the unstacking of a flat blank (F) is not demanded,
- and the synchronised axial flow of batches (L) of articles (A) and the synchronised axial flow of flat blanks (F) are made to cooperate, so that a step including a flat blank (F) corresponds to a step including a batch of articles (A) and a step not including a flat blank (F) corresponds to a step not including a batch of articles (A).

6. A method according to any one of claims 1 to 5, **characterised by** the fact that, in order to constitute a synchronised axial flow of flat blanks (F) in which each blank (F) in the flow is separated from the blank (F) that precedes it and/or from the blank (F) that follows it by an axial empty space (19) having the axial length of one article (A) or a multiple of the axial length of one article (A), each flat blank (F) in the synchronised axial flow of flat blanks (F) is pushed by means of driving pusher fingers (18) regularly spaced apart axially and arranged so as to be either in an active projecting situation or in an inactive retracted situation, the successive pusher fingers (18) are guided and switched so that they are situated in the active projecting situation or in the inactive retracted situation corresponding to the configuration required for driving the successive flat blanks (F) in the synchronised axial flow of flat blanks (F) matching the synchronised axial flow of batches (L) of articles.

7. A method according to claim 6, **characterised by** the fact that, in a mode adjusting the pitch of the synchronised axial flow of flat blanks (F):
- in an inactive conveying length (24b) of return of the pusher fingers (18) in which the pusher fingers (18) fulfil no function of pushing the flat blanks (F), the successive pusher fingers (18) are switched so as to cause them to be situated in the active projecting situation or in the inactive retracted situation so as to define a configuration of successive pusher fingers (18) corresponding to the configuration required for driving the successive flat blanks (F) in the synchronised axial flow of flat blanks (F) matching the synchronised axial flow of batches (L) of articles (A),
- once the pusher fingers (18) have been thus switched and brought into the active projecting situation or into the inactive retracted situation required, the pusher fingers (18) are guided in movement while keeping for them their active projecting or inactive retracted situation, including in an active conveying length (24a) of bringing the pusher fingers (18) where the pusher fingers (18) fulfil their function of pushing the flat blanks (F).

8. A method according to either one of claims 6 and 7, **characterised by** the fact that, in a production mode, without adjustment of the pitch of the synchronised axial flow of flat blanks (F) ; the pusher fingers (18) are guided in movement while keeping for them their active projecting or inactive retracted situation corresponding to the configuration required for driving the successive flat blanks (F) in the synchronised axial flow of flat blanks (F) matching the synchronised axial flow of batches (L) of articles (A), in an inactive conveying length (24b) of return of the pusher fingers (18) where the pusher fingers (18) do not fulfil any function of pushing the flat blanks (F) and in an active conveying length (24a) of bringing the pusher fingers (18) where the pusher fingers (18) fulfil their function of pushing the flat blanks (F).

9. A method according to any one of claims 1 to 8, **characterised by** the fact that, when the blanks (F) are unstacked, the blank (F) to be unstacked is separated from the blank (F) that follows it by accelerating the blank (F) to be unstacked.

10. A machine for the exterior packaging, in an exterior packaging blank (F), of articles (A) arranged in blocks (P) each containing a plurality of articles (A) of the same length in the direction of travel, arranged in one or more columns and/or one or more rows, in order to form batches (L) of articles (A) arranged in one or more layers of blocks (P) and comprising a peripheral exterior packaging, for implementing the method according to any one of claims 1 to 9, which comprises:
- towards the upstream end, means (1) for the axial bringing of an incoming random axial flow of blocks (P) of articles (A) and means of forming batches (L) of articles,
- towards the upstream end, means for forming a stack of flat exterior packaging blanks (F) and means (10) of unstacking the blanks (F) successively,
- downstream of the means of forming batches (L) of articles (A) and the means (10) of unstacking the blanks (F), means of cooperation of each batch of articles (A) formed with each unstacked flat blank (F) and, downstream, means for folding the blank (F) around the batch of articles (A) and for securing it on itself,
- towards the downstream, means for the axial discharge of the outgoing axial flow of batches (L) of exteriorly packaged articles (A),
**characterised by** the fact that it comprises:
- towards the upstream end, means (2) of adjusting and means of synchronising to the pitch of the machine the blocks (P) of articles (A) in the incoming flow, followed by means for axially conveying a synchronised axial flow (3) of blocks (P) of articles (A),
- means (7) of transferring all the blocks (P) of articles (A) from the means (3) for the axial conveyance of the synchronised axial flow of blocks (P) of articles (A) to the means (8) for the axial conveyance of a synchronised axial flow of batches (L) of articles (A), according to the required format and rhythm,
- means (10) for unstacking flat blanks (F) on demand responsive to the means (7) of transferring blocks (P) of articles, followed by means for the axial conveyance of a synchronised axial flow (17) of flat blanks (F) matching the means (8) for the axial conveyance of the synchronised axial flow of batches (L) of articles (A),
- downstream of the means for the axial conveyance (8) of the synchronised axial flow of batches (L) of articles (A) and the means (17) for the axial conveyance of the synchronised axial flow of flat blanks (F), means for the successive cooperation of each batch of articles (A) with each flat blank (F) and, downstream, means for folding the blank (F) around the batch of articles (A) and for securing it on itself.

11. An exterior packaging machine according to claim 10, **characterised by** the fact that the means (8) for the axial conveyance of a synchronised axial flow of batches (L) of articles (A) comprises positioning and holding projections (12) regularly spaced apart axially so that a batch of articles (A) in the synchronised flow of batches (L) of articles (A) is positively kept separate from the batch of articles (A) the precedes it and/or from the batch of articles (A) that follows it by an axial empty space (5c) having at a minimum the axial length of one article (A) or having the axial length of a multiple of the axial length of an article (A), the axial pitch of the machine being thus variable and adapted to the length of the batch of articles, the means for axial conveyance of a synchronised axial flow of batches (L) of articles (A) being adapted to the conveyance of batches (L) of articles (A) of variable axial length, without requiring adjustment.

12. An exterior packaging machine according to either one of claims 10 and 11, **characterised by** the fact that the means (8) for axial conveyance of a synchronised axial flow of batches (L) of articles (A) is adjustable for transverse separation, the means (8) for axial conveyance of a synchronised axial flow of batches (L) of articles (A) being adapted to the conveyance of batches (L) of articles (A) of variable transverse length.

13. An exterior packaging machine according to any one of claims 10 to 12, **characterised by** the fact that the means (17) for axial conveyance of a synchronised axial flow of flat blanks (F) comprise positioning and holding pusher fingers (18) regularly spaced apart axially and retractable so that a flat blank (F) in the synchronised flow of flat blanks (F) is positively kept separate from the flat blank (F) that precedes it and/or from the flat blank (F) that follows it by an axial empty space (19) having at a minimum the axial length of one article (A) or having the axial length of a multiple of the axial length of one article (A), the axial pitch of the machine being thus variable and adapted to the length of the batch (L) of articles (A), the means (17) for axial conveyance of a synchronised axial flow of blanks (F) being adapted to the conveyance of blanks (F) of variable axial length, without requiring adjustment.

14. An exterior packaging machine according to any one of claims 10 to 13, **characterised by** the fact that the means (17) for axial conveyance of a synchronised axial flow of flat blanks (F) is adjustable for transverse separation, the means (17) for axial conveyance of a synchronised axial flow of flat blanks (F) being adapted to the conveyance of flat blanks (F) of variable transverse length.

15. An exterior packaging machine according to any one of claims 10 to 14, **characterised by** the fact that it comprises, upstream of the means of cooperation of each batch of articles (A) in the synchronised axial flow of batches (L) of articles (A) with each flat blank (F) in the synchronised axial flow of flat blanks (F), means (11) of fine final readjustment of the synchronisation of the blocks (P) of articles (A) in the synchronised axial flow of blocks (P) of articles.

16. An exterior packaging machine according to any one of claims 10 to 15, **characterised by** the fact that the means (7) of transferring all the blocks (P) of articles (A) from the means for axial conveyance of the synchronised axial flow of blocks (P) of articles (A) to the means of axial conveyance of a synchronised axial flow of batches (L) of articles (A), according to the required format and rhythm, comprise one or more gripping manipulation robots (7a, 7b).

17. An exterior packaging machine according to any one of claims 10 to 16, **characterised by** the fact that the means (7) of transferring all the blocks (P) of articles (A) from the means (3) of axial conveyance of the synchronised axial flow of blocks (P) of articles (A) to the means (8) of axial conveyance of a synchronised axial flow of batches (L) of articles (A), according to the required format and rhythm, comprise means (7) for the gripping manipulation of a single block (P) at a time or of several blocks (P) simultaneously.

18. An exterior packaging machine according to any one of claims 10 to 17, **characterised by** the fact that it comprises means of monitoring each step of the means (8) of axial conveyance of the synchronised axial flow of batches (L) of articles (A) in order to detect the presence or absence of a batch of articles (A) and means of controlling the unstacking means (10) responsive to these monitoring means.

19. An exterior packaging machine according to any one of claims 10 to 18, **characterised by** the fact that the adjustment means (2) and the means of synchronisation to the pitch of the machine of the blocks (P) and articles (A) in the incoming flow comprise the upstream part (3a) of the means (3) of axial conveyance of a synchronised axial flow of blocks (P) of articles (A) with which there are associated retractable members (4) for downstream blocking of the blocks (P) of articles (A) moving axially at a lower speed than that of the means of axial conveyance of a synchronised axial flow of blocks (P) of articles.

20. An exterior packaging machine according to any one of claims 10 to 19, **characterised by** the fact that the downstream part of the means (3) of axial conveyance of the synchronised axial flow of blocks (P) of articles (A) is of sufficient length suitable for all the blocks (P) that they receive being able to be transferred by the transfer means (7) to the means (8) of axial conveyance of a synchronised axial flow of the batches (L) of articles (A).

21. An exterior packaging machine according to any one of claims 10 to 20, **characterised by** the fact that the means (3) of axial conveyance of the synchronised axial flow of blocks (P) of articles (A) and the means (8) of axial conveyance of the synchronised axial flow of the batches (L) of articles (A) are placed side by side.

22. An exterior packaging machine according to any one of claims 10 to 21, **characterised by** the fact that the means (2) of axial conveyance of the synchronised axial flow of blocks (P) of articles (A) have a transverse width suitable for receiving a plurality of blocks (P) of articles (A).

23. An exterior packaging machine according to any one of claims 10 to 22, **characterised by** the fact that the means (8) of axial conveyance of the synchronised axial flow of blocks (L) of articles (A) have a transverse width able to receive a single block (P) of articles (A).

24. An exterior packaging machine according to any one of claims 11 to 23, in that they are dependent on claims 11 and 12, **characterised by** the fact that the means (8) of axial conveyance of a synchronised axial flow of batches (L) of articles (A) is in the form of two endless belts (13a, 13b) arranged parallel to each other and forming a conveying corridor (13c), supporting positioning and holding projections (12) regularly spaced apart axially, arranged so as to be directed towards the corridor (13c), the two belts (13a, 13b) being carried by carrying means in a movable fashion with locking, so as to be adjustable for transverse separation.

25. An exterior packaging machine according to any one of claims 13 to 24, in that they are dependent on claims 13 and 14, **characterised by** the fact that the means (17) of axial conveyance of a synchronised axial flow of flat blanks (F) is in the form of two endless drive belts (20a, 29b) placed parallel to each other while forming a conveying corridor (20c), supporting positioning and driving pusher fingers (18) regularly spaced apart axially, arranged so as to be movable and lockable in position so as each to be separately either in an active projecting situation or in an inactive retracted situation, and comprise means (22) of guiding and means (23) of switching the successive pusher fingers (18) suitable for them to be situated in the active projecting situation or in the inactive retracted situation corresponding to the required configuration for driving the successive flat blanks (F) of the synchronised axial flow of flat blanks (F) matching the synchronised axial flow of batches (L) of articles (A).

26. An exterior packaging machine according to claim 25, **characterised by** the fact that the means (17) of axial conveyance of a synchronised axial flow of flat blanks (F) comprise an active conveying length (24a) for bringing the pusher fingers (18) where the pusher fingers (18) fulfil their function of pushing the flat blanks (F) and an inactive conveying length (24b) of return of the pusher fingers (18) where the pusher fingers (18) fulfil no function of pushing the flat blanks (F), a length on which the means (22) of guiding and the means (23) of switching the pusher fingers (18) are situated.

27. An exterior packaging machine according to either one of claims 25 and 26, **characterised by** the fact that a pusher finger (18) is carried by an axial driving piece (25) carried by an endless belt (20a, 20b), the axial driving piece (25) being able to cooperate with axial sliding with an axial guide runner (26), the pusher finger (18) being mounted on the axial driving piece (25) so as to be articulated about a transverse shaft (18c) so as to be able to pivot in a relative fashion on a travel having two end-of-travel positions defining the two active projecting and inactive retracted situations, the pusher finger (18) comprising laterally a control stud (27) directed transversely and separated from the pivot shaft (18c), cooperating with one of the two runners for axial guidance of the stud (28a, 28b), arranged parallel to each other and to the runner (26) for axial guidance of the driving piece (25), the stud (27) being in one of two axial stud guidance runners (28a) in the active projecting situation and being in the other one (28b) of the two axial stud guidance runners (28a, 28b) in the inactive retracted situation.

28. An exterior packaging machine according to claim 27, **characterised by** the fact that the switching means (23) comprise a guidance bypass (29a, 29b) connecting the two axial stud guidance runners (28a, 28b) and a controlled movable orientation piece (30a, 30b) able to control the guidance of the stud (27) so that it remains in the axial stud guidance runner (28a, 28b) where it was situated or so that it is oriented towards the other axial stud guidance runner (28b, 28a) .

29. An exterior packaging machine according to any one of claims 10 to 28, **characterised by** the fact that the unstacking means (10) comprise means (10d) able to move the blank (F) to be unstacked away from the blank (F) that follows it, comprising means of accelerating the blank (F) to be unstacked.

## Patentansprüche

1. Umverpackungsverfahren in einer Fläche (F) der Umverpackung von Artikeln (A), die in Plaketten (P) angeordnet sind, die jeweils eine Vielzahl von Artikeln (A) derselben Länge in der Ablaufrichtung umfassen, die in einer oder mehreren Längsreihen und / oder einer oder mehreren Querreihen angeordnet sind, um Lose (L) aus Artikeln (A) zu formen, die in einer oder mehreren Schichten aus Plaketten (P) angeordnet sind und eine peripherische Umverpackung umfassen, in der auf dynamische Weise:
- man über einen eintretenden zufälligen axialen Fluss von Plaketten (P) aus Artikeln (A) verfügt und man Lose (L) aus Artikeln bildet,
- man über einen Stapel von flachen Umverpackungsflächen (F) verfügt und man die Flächen (F) sukzessive entstapelt,
- man sukzessive jedes gebildete Los aus Artikeln (A) mit jeder entstapelten, flachen Fläche (F) zusammenwirken lässt, man dann die Fläche (F) um das Los aus Artikeln (A) faltet und es auf sich selbst fest befestigt,
- man den ausgehenden axialen Fluss der Lose (L) aus umverpackten Artikeln (A) austrägt,
- wobei die Lose (L) aus umverpackten Artikeln (A) eine Anzahl von Artikeln (A) pro Plakette, eine Anordnung der Artikel (A) auf jeder Plakette und eine Anzahl von gestapelten Plaketten (P) umfassen, die je nach dem Format der gewünschten Lose (L) variabel ist, **gekennzeichnet durch** die Tatsache, dass
- man die Plaketten (P) aus Artikeln (A) des eingehenden axialen Flusses nach der Kadenz der Maschine einstellt und synchronisiert, um einen synchronisierten, axialen Fluss von Plaketten (P) aus Artikeln (A) zu formen,
- man alle Plaketten (P) aus Artikeln (A) von dem synchronisierten axialen Fluss von Plaketten (P) aus Artikeln (A) überträgt, um einen synchronisierten axialen Fluss von Losen (L) aus Artikeln (A) gemäß dem gewünschten Format und der gewünschten Kadenz zu bilden,
- jedes Los aus Artikeln (A) des synchronisierten axialen Flusses von Losen (L) aus Artikeln (A) damit axial von dem Los aus Artikeln (A), das ihm vorausgeht und / oder vom dem Los aus Artikeln (A), das ihm nachfolgt, um einen axialen Leerraum (5a, 5c) mit der axialen Länge eines Artikels (A) oder eines Vielfachen der axialen Länge eines Artikels (A) getrennt ist, wobei die axiale Kadenz der Maschine somit variabel und an die axiale Länge des Loses aus Artikeln (A) angepasst ist,
- man dann die flachen Flächen (F) auf Anforderung je nach den somit übertragenen Plaketten (P) aus Artikeln (A) entstapelt, um einen synchronisierten axialen Fluss aus flachen Flächen (F) zu bilden, der genau dem synchronisierten axialen Fluss an Losen (L) aus Artikeln (A) entspricht,
- jede Fläche (F) des synchronisierten axialen Flusses an flachen Flächen (F) wird somit von der Fläche (F) getrennt, die ihr vorausgeht und / oder der Fläche (F), die Ihr um einen axialen Leerraum (19) nachfolgt, der die axiale Länge eines Artikels (A) oder einer Vielzahl der axialen Länge eines Artikels (A) hat,
- ab dem synchronisierten axialen Fluss von Losen (L) aus Artikeln (A) und dem synchronisierten axialen Fluss aus flachen Flächen (F) man sukzessive jedes Los aus Artikeln (A) mit jeder flachen Fläche (F) zum Zusammenwirken bringt, bevor man die Fläche (F) um das Los aus Artikeln (A) faltet und es auf sich selbst fest befestigt.

2. Verfahren gemäß Anspruch 1, **gekennzeichnet durch** die Tatsache, dass man, bevor man jedes Los aus Artikeln (A) des synchronisierten axialen Flusses von Losen (L) aus Artikeln (A) mit jeder flachen Fläche (F) des synchronisierten axialen Flusses an flachen Flächen (F) zum Zusammenwirken bringt, eine axiale, endgültige und feine Neueinstellung der Synchronisation der Plaketten (P) aus Artikeln (A) des synchronisierten axialen Flusses an Plaketten (P) aus Artikeln (A) gewährleistet.

3. Verfahren gemäß Anspruch 1 und 2, **gekennzeichnet durch** die Tatsache, dass man alle Plaketten (P) aus Artikeln (A) von dem synchronisierten Fluss von Plaketten (P) aus Artikeln (A) überträgt, um einen synchronisierten axialen Fluss von Losen (L) aus Artikeln (A) gemäß dem gewünschten Format und der gewünschten Kadenz durch eine Handhabung eines vollautomatischen Ergreifens zu bilden.

4. Verfahren gemäß Anspruch 1 bis 3, **gekennzeichnet durch** die Tatsache, dass man alle Plaketten (P) aus Artikeln (A) von dem synchronisierten axialen Fluss an Plaketten (P) aus Artikeln (A) überträgt, um einen synchronisierten axialen Fluss an Losen (L) aus Artikeln (A) gemäß dem gewünschten Format und der gewünschten Kadenz **durch** eine Handhabung eines Ergreifens einer einzigen Plakette (P) gleichzeitig oder mehrerer Plaketten (P) gleichzeitig zu bilden.

5. Verfahren gemäß Anspruch 1 bis 4, **gekennzeichnet durch** die Tatsache, dass:
- jeder Schritt des synchronisierten, axialen Flusses von Losen (L) aus Artikeln (A) kontrolliert wird,
- wenn der Schritt ein Los (L) aus Artikeln (A) umfasst, das Entstapeln einer flachen Fläche (F) gesteuert wird,
- wenn der Schritt kein Los (L) aus Artikeln (A) umfasst, man das Entstapeln einer flachen Fläche (F) nicht anfordert,
- und man den synchronisierten axialen Fluss von Losen (L) aus Artikeln (A) und den synchronisierten axialen Fluss von flachen Flächen (F) zusammenwirken lässt, derart, dass einem Schritt, der ein Los aus Artikeln (A) umfasst, ein Schritt entspricht, der eine flache Fläche (F) umfasst und einem Schritt, der kein Los aus Artikeln (A) umfasst, ein Schritt entspricht, der keine flache Fläche (F) umfasst.

6. Verfahren gemäß Anspruch 1 bis 5, **gekennzeichnet durch** die Tatsache, dass zur Bildung eines synchronisierten axialen Flusses von flachen Flächen (F), in dem jede Fläche (F) des Flusses von der Fläche (F), die ihr vorausgeht und / oder von der Fläche (F), die ihr nachfolgt, um einen axialen Leerraum (19) mit der axialen Länge eines Artikels (A) oder einer Vielzahl der axialen Länge eines Artikels (A) getrennt ist, man jede flache Fläche (F) des synchronisierten axialen Flusses von flachen Flächen (A) mittels Antriebs-Schiebefingern (18), die axial regelmäßig beabstandet und angeordnet sind, um entweder in aktiver hervorstehender Position zu sein oder in inaktiver eingefahrener Position, schiebt, man die sukzessiven Schiebefinger (18) führt und stellt, damit sie sich in der aktiven hervorstehenden Position oder in der inaktiven eingefahrenen Position befinden, die der erforderlichen Konfiguration entsprechen, um die sukzessiven flachen Flächen (F) des synchronisierten axialen Flusses von flachen Flächen (F) in Entsprechung mit dem synchronisierten flachen Fluss von Losen (L) aus Artikeln anzutreiben.

7. Verfahren gemäß Anspruch 6, **gekennzeichnet durch** die Tatsache, dass in einem Einstellmodus der Kadenz des synchronisierten axialen Flusses von flachen Flächen (F):
- man in einem inaktiven Beförderungsabschnitt (24b) zur Rückkehr der Schiebefinger (18), in dem die Schiebefinger (18) keine Schiebefunktion der flachen Flächen (F) gewährleisten, die sukzessiven Schiebefinger (18) stellt, um sie dazu zu bringen, sich in der aktiven hervorstehenden Situation oder in der inaktiven eingefahrenen Situation derart zu befinden, dass eine Konfiguration von sukzessiven Schiebefingern (18) definiert wird, die der erforderlichen Konfiguration entspricht, um die sukzessiven flachen Flächen (F) des synchronisierten axialen Flusses von flachen Flächen (F) in Entsprechung mit dem synchronisierten axialen Fluss von Losen (L) aus Artikeln (A) anzutreiben,
- man, sobald die Schiebefinger (18) auf diese Weise gestellt und in die aktive hervorstehende Situation oder in die erforderliche inaktive eingefahrene Situation verbracht sind, die Schiebefinger (18) in Verschiebung führt, indem ihre aktive hervorstehende oder inaktive eingefahrene Situation beibehalten wird, unter Einschluss in einem aktiven Beförderungsabschnitt (24a) zur Verbringung der Schiebefinger (18), in dem die Schiebefinger (18) ihre Schiebefunktion der flachen Flächen (F) gewährleisten.

8. Verfahren gemäß Anspruch 6 und 7, **gekennzeichnet durch** die Tatsache, dass man in einem Produktionsmodus ohne Einstellung der Kadenz des synchronisierten axialen Flusses von flachen Flächen (F) die Schiebefinger (18) in Verschiebung führt, indem ihre aktive hervorstehende oder inaktive eingefahrene Situation beibehalten wird, die der erforderlichen Konfiguration entspricht, um die sukzessiven flachen Flächen (F) des synchronisierten axialen Flusses von flachen Flächen (F) in Entsprechung mit dem synchronisierten axialen Fluss von Losen (L) aus Artikeln (A) in einem inaktiven Beförderungsabschnitt zur Rückkehr (24b) der Schiebefinger (18) anzutreiben, in dem die Schiebefinger (18) keine Schiebefunktion der flachen Flächen (F) gewährleisten und in einem aktiven Beförderungsabschnitt zur Verbringung (24a) der Schiebefinger (18), in dem die Schiebefinger (18) ihre Schiebefunktion der flachen Flächen (F) gewährleisten.

9. Verfahren gemäß Anspruch 1 bis 8, **gekennzeichnet durch** die Tatsache, dass man beim Entstapeln der Flächen (F) die zu entstapelnde Fläche (F) von der Fläche (F) beabstandet, die ihr folgt, indem die zu entstapelnde Fläche (F) beschleunigt wird.

10. Umverpackungsmaschine in einer Fläche (F) einer Umverpackung, von Artikeln (A), die in Plaketten (P) angeordnet sind, die jeweils eine Vielzahl von Artikeln (A) derselben Länge in der Ablaufrichtung haben, die in einer oder mehreren Längsreihen und / oder in einer oder mehreren Querreihen angeordnet sind, um Lose (L) aus Artikeln (A) zu formen, die in einer oder mehreren Schichten aus Plaketten (P) angeordnet sind und eine peripherische Umverpackung umfassen, für die Umsetzung des Verfahrens gemäß Anspruch 1 bis 9, die umfasst:
- vorgeschaltet, Mittel (1) zur axialen Verbringung eines zufälligen axialen eingehenden Flusses von Plaketten (P) aus Artikeln (A) und Mittel zur Bildung der Lose (L) aus Artikeln,
- vorgeschaltet, Mittel zum Formen eines Stapels von flachen Flächen (F) einer Umverpackung und Mittel (10) zum sukzessiven Entstapeln der Flächen (F),
- nachgeschaltet, Mittel zur Bildung der Lose (L) von Artikeln (A) und Mittel (10) zum Entstapeln der Flächen (F), Mittel zum Zusammenwirken jedes Loses von Artikeln (A), dass mit jeder entstapelten flachen Fläche (F) gebildet ist, und nachgeschaltete Mittel zum Falten der Fläche (F) um das Los aus Artikeln (A) und zur festen Befestigung auf sich selbst,
- nachgeschaltet, Mittel zum axialen Austragen des ausgehenden axialen Flusses von Losen (L) aus umverpackten Artikeln (A),
**gekennzeichnet durch** die Tatsache, dass sie umfasst:
- vorgeschaltet, Mittel (2) zum Einstellen und Mittel zum Synchronisieren der Plaketten (P) von Artikeln (A) des eingehenden Flusses mit der Kadenz der Maschine, gefolgt von Mitteln zur axialen Beförderung eines synchronisierten axialen Flusses (3) von Plaketten (P) aus Artikeln (A),
- Mittel (7) zur Übertragung von allen Plaketten (P) von Artikeln (A) von den Mitteln zur axialen Beförderung (3) des synchronisierten axialen Flusses von Plaketten (P) aus Artikeln (A) zu Mitteln zur axialen Beförderung (8) eines synchronisierten axialen Flusses (L) von Artikeln (A) gemäß dem gewünschten Format und der gewünschten Kadenz,
- Mittel (10) zum Entstapeln der flachen Flächen (F) auf Anforderung, die auf Mittel (7) zur Übertragung der Plaketten (P) von Artikeln reagieren, gefolgt von Mitteln zur axialen Beförderung eines synchronisierten axialen Flusses (17) von flachen Flächen (F) in Entsprechung mit den Mitteln (8) zur axialen Beförderung des synchronisierten axialen Flusses von Losen (L) aus Artikeln (A)
- nachgeschaltet, Mittel zur axialen Beförderung (8) des synchronisierten axialen Flusses von Losen (L) aus Artikeln (A) und Mittel zur axialen Beförderung (17) des synchronisierten axialen Flusses von flachen Flächen (F), Mittel zum sukzessiven Zusammenwirken von jedem Los von Artikeln (A) mit jeder flachen Fläche (F) und nachgeschaltet Mittel zum Falten der Fläche (F) um das Los von Artikeln (A) und zur Befestigung auf sich selbst.

11. Umverpackungsmaschine gemäß Anspruch 10, **gekennzeichnet durch** die Tatsache, dass die Mittel zur axialen Beförderung (8) eines synchronisierten axialen Flusses von Losen (L) aus Artikeln (A) Vorsprünge (12) zur Positionierung und zum Festhalten umfassen, die axial regelmäßig beabstandet sind, damit ein Los aus Artikeln (A) des synchronisierten Flusses von Losen (L) aus Artikeln (A) von dem Los aus Artikeln (A), das ihm nachfolgt, um einen axialen Leerraum (5c) mit mindestens der axialen Länge eines Artikels (A) oder mit der axialen Länge eines Vielfachen der axialen Länge eines Artikels (A) positiv getrennt gehalten wird, wobei die axiale Kadenz der Maschine somit variabel und an die Länge des Loses von Artikeln angepasst ist, wobei die Mittel zur axialen Beförderung eines synchronisierten axialen Flusses von Losen (L) aus Artikeln (A) an die Beförderung von Losen (L) aus Artikeln (A) mit einer variablen axialen Länge ohne Notwendigkeit einer Einstellung angepasst sind.

12. Umverpackungsmaschine gemäß Anspruch 10 und 11, **gekennzeichnet durch** die Tatsache, dass die Mittel zur axialen Beförderung (8) eines synchronisierten axialen Flusses von Losen (L) aus Artikeln (A) in transversaler Beabstandung einstellbar sind, wobei die Mittel zur axialen Beförderung (8) eines synchronisierten axialen Flusses von Losen (L) aus Artikeln (A) an die Beförderung von Losen (L) aus Artikeln (A) mit variabler transversaler Länge angepasst sind.

13. Umverpackungsmaschine gemäß Anspruch 10 bis 12, **gekennzeichnet durch** die Tatsache, dass die Mittel zur axialen Beförderung (17) eines synchronisierten axialen Flusses von flachen Flächen (F) Schiebefinger (18) zur Positionierung und zum Festhalten umfassen, die regelmäßig axial beabstandet und einfahrbar sind, damit eine flache Seite (F) des synchronisierten Flusses von flachen Flächen (F) von der flachen Fläche (F), die ihr vorangeht und / oder der flachen Flächen (F), die ihr nachfolgt, um einen axialen Leerraum (19) mit mindestens der axialen Länge eines Artikels (A) oder der axialen Länge einer Vielzahl der axialen Länge eines Artikels (A) positiv getrennt gehalten wird, wobei die axiale Kadenz der Maschine somit variabel und an die Länge des Loses (L) von Artikeln (A) angepasst ist, wobei die Mittel zur axialen Beförderung (17) eines synchronisierten axialen Flusses von Flächen (F) an die Beförderung von Flächen (F) variabler axialer Länge, ohne Notwendigkeit einer Einstellung angepasst sind.

14. Umverpackungsmaschine gemäß Anspruch 10 bis 13, **gekennzeichnet durch** die Tatsache, dass die Mittel zur axialen Beförderung (17) eines synchronisierten axialen Flusses von flachen Flächen (F) in transversaler Beabstandung einstellbar ist, wobei die Mittel zur axialen Beförderung (17) eines synchronisierten axialen Flusses von flachen Flächen (F) an die Beförderung von flachen Flächen (F) variabler transversaler Länge angepasst sind.

15. Umverpackungsmaschine gemäß Anspruch 10 bis 14, **gekennzeichnet durch** die Tatsache, dass sie vorgeschaltet Mittel zum Zusammenwirken jedes Loses von Artikeln (A) des synchronisierten axialen Flusses von Losen (L) aus Artikeln (A) mit jeder flachen Fläche (F) des synchronisierten axialen Flusses von flachen Seiten (F), Mittel (11) zur endgültigen und feinen Neueinstellung der Synchronisation der Plaketten (P) von Artikeln (A) des synchronisierten axialen Flusses von Plaketten (P) von Artikeln umfasst.

16. Umverpackungsmaschine gemäß Anspruch 10 bis 15, **gekennzeichnet durch** die Tatsache, dass die Mittel (7) zur Übertragung aller Plaketten (P) von Artikeln (A) von den Mitteln zur axialen Beförderung des synchronisierten axialen Flusses von Plaketten (P) von Artikeln (A) zu den Mitteln zur axialen Beförderung eines synchronisierten axialen Flusses von Losen (L) aus Artikeln (A) gemäß dem gewünschten Format und der gewünschten Kadenz einen oder mehrere Roboter (7a, 7b) zur Handhabung eines vollautomatischen Ergreifens umfassen.

17. Umverpackungsmaschine gemäß Anspruch 10 bis 16, **gekennzeichnet durch** die Tatsache, dass die Mittel (7) zur Übertragung aller Plaketten (P) von Artikeln (A) von den Mitteln zur axialen Beförderung (3) des synchronisierten axialen Flusses von Plaketten (P) aus Artikeln (A) zu den Mitteln zur axialen Beförderung (8) eines synchronisierten Flusses von Losen (L) von Artikeln (A) gemäß dem gewünschten Format und der gewünschten Kadenz Mittel (7) zur Handhabung einer einzigen Plakette (P) gleichzeitig oder mehrerer Plaketten (P) gleichzeitig umfassen.

18. Umverpackungsmaschine gemäß Anspruch 10 bis 17, **gekennzeichnet durch** die Tatsache, dass sie Kontrollmittel jedes Schritts der Mittel zur axialen Beförderung (8) des synchronisierten axialen Flusses von Losen (L) aus Artikeln (A) umfasst, um das Vorhandensein oder das Fehlen eines Loses von Artikeln (A) und Steuermittel der Mittel (10) zum Entstapeln zu erfassen, die auf diese Kontrollmittel reagieren.

19. Umverpackungsmaschine gemäß Anspruch 10 bis 18, **gekennzeichnet durch** die Tatsache, dass die Einstellmittel (2) und die Mittel zur Synchronisation mit der Kadenz der Maschine der Plaketten (P) aus Artikeln (A) des eingehenden Flusses den vorgeschalteten Teil (3a) der Mittel zur axialen Beförderung (3) eines synchronisierten axialen Flusses von Plaketten (P) aus Artikeln (A) umfassen, dem nachgeschaltete, einfahrbare Blockierorgane der Plaketten (P) aus Artikeln (A) zugeordnet sind, die sich axial bei einer geringeren Geschwindigkeit verschieben als die der Mittel zur axialen Beförderung eines synchronisierten axialen Flusses von Plaketten (P) aus Artikeln.

20. Umverpackungsmaschine gemäß Anspruch 10 bis 19, **gekennzeichnet durch** die Tatsache, dass der nachgeschaltete Teil der Mittel zur axialen Beförderung (3) des synchronisierten axialen Flusses von Plaketten (P) aus Artikeln (A) eine ausreichende Länge hat, die dazu geeignet ist, dass alle Plaketten (P), die sie aufnehmen, von den Mitteln (7) zur Übertragung auf die Mittel zur axialen Beförderung (8) eines synchronisierten axialen Flusses der Lose (L) von Artikeln (A) übertragen werden können.

21. Umverpackungsmaschine gemäß Anspruch 10 bis 20, **gekennzeichnet durch** die Tatsache, dass die Mittel zur axialen Beförderung (3) des synchronisierten axialen Flusses von Plaketten (P) aus Artikeln (A) und die Mittel zur axialen Beförderung (8) des synchronisierten Flusses der Lose (L) aus Artikeln (A) nebeneinander angeordnet sind.

22. Umverpackungsmaschine gemäß Anspruch 10 bis 21, **gekennzeichnet durch** die Tatsache, dass die Mittel zur axialen Beförderung (2) des synchronisierten axialen Flusses von Plaketten (P) aus Artikeln (A) eine transversale Breite haben, die geeignet ist, eine Vielzahl von Plaketten (P) aus Artikeln (A) aufzunehmen.

23. Umverpackungsmaschine gemäß Anspruch 10 bis 22, **gekennzeichnet durch** die Tatsache, dass die Mittel zur axialen Beförderung (8) des synchronisierten axialen Flusses der Lose (L) aus Artikeln (A) eine transversale Breite haben, die geeignet ist, eine einzige Plakette (P) aus Artikeln (A) aufzunehmen.

24. Umverpackungsmaschine gemäß Anspruch 11 bis 23, insofern, als sie von den Ansprüchen 11 und 12 abhängen, **gekennzeichnet durch** die Tatsache, dass die Mittel zur axialen Beförderung (8) eines synchronisierten axialen Flusses von Losen (L) aus Artikeln (A) die Form von zwei Endlosbändern (13a, 13b) aufweisen, die parallel untereinander angeordnet sind und einen Beförderungsgang (13c) formen, der regelmäßig beabstandete Vorsprünge (12) zur Positionierung und zum Festhalten trägt, die angeordnet sind, um zum Gang (13c) ausgerichtet zu sein, wobei die zwei Bänder (13a, 13b) von Trägermitteln mobil mit Blockierung getragen werden, um in transversaler Beabstandung einstellbar zu sein.

25. Umverpackungsmaschine gemäß Anspruch 13 bis 24 insofern, als sie von den Ansprüchen 13 und 14 abhängen, **gekennzeichnet durch** die Tatsache, dass die Mittel zur axialen Beförderung (17) eines synchronisierten axialen Flusses von flachen Flächen (F) die Form von zwei Endlosbändern (20a, 29b) zum Antrieb aufweisen, die untereinander parallel angeordnet sind und dabei einen Beförderungsgang (20c) formen, regelmäßig axial beabstandete Schiebefinger (18) zur Positionierung und zum Antrieb tragen, die mobil und blockierbar in der Position derart angeordnet sind, dass jeder getrennt entweder in aktiver hervorstehender Situation ist oder in inaktiver eingefahrener Situation, und Führungsmittel (22) und Stellmittel (23) der sukzessiven Schiebefinger (18) umfassen, die dazu geeignet sind, dass sie sich in der aktiven hervorstehenden Situation oder in der inaktiven eingefahrenen Situation befinden, die der erforderlichen Konfiguration entspricht, um die sukzessiven flachen Flächen (F) des synchronisierten axialen Flusses der flachen Flächen (F) in Entsprechung mit dem synchronisierten axialen Fluss von Losen (L) aus Artikeln (A) anzutreiben.

26. Umverpackungsmaschine gemäß Anspruch 25, **gekennzeichnet durch** die Tatsache, dass die Mittel zur axialen Beförderung (17) eines synchronisierten axialen Flusses der flachen Flächen (F) einen aktiven Beförderungsabschnitt (24a) zur Verbringung der Schiebefinger (18) dorthin, wo die Schiebefinger (18) ihre Schiebefunktion der flachen Flächen (F) gewährleisten, und einen inaktiven Beförderungsabschnitt (24b) zur Rückkehr der Schiebefinger (18) dorthin, wo die Schiebefinger (18) keine Schiebefunktion der flachen Flächen (F) gewährleisten, einem Abschnitt, auf dem sich die Führungsmittel (22) und die Stellmittel (23) der Schiebefinger (18) befinden, umfassen.

27. Umverpackungsmaschine gemäß Anspruch 25 und 26, **gekennzeichnet durch** die Tatsache, dass ein Schiebefinger (19) **durch** ein axiales Antriebsteil (25) getragen wird, das **durch** ein Endlosband (20a, 20b) getragen wird, wobei das axiale Antriebsteil (25) geeignet ist, axial gleitend mit einer axialen Führungsschiene (26) zusammenzuwirken, wobei der Schiebefinger (18) auf dem axialen Antriebsteil (25) artikuliert um eine transversale Achse (18c) montiert ist, um relativ auf einem Lauf schwenken zu können, der zwei Endpositionen hat, die die zwei Situationen - aktiv hervorstehend und inaktiv eingefahren - definieren, wobei der Schiebefinger (18) lateral einen Steuernippel (27) umfasst, der transversal gerichtet und von der Schwenkachse (18c) beabstandet ist, der mit einer der zwei axialen Führungsschienen des Nippels (28a, 28b) zusammenwirkt, die untereinander und zur axialen Führungsschiene (26) des Antriebsteils (25) parallel angeordnet sind, wobei der Nippel (27) in einer der zwei axialen Führungsschienen des Nippels (28a) in der aktiven hervorstehenden Situation ist und in der anderen (28b) der zwei axialen Führungsschienen des Nippels (28a, 28b) in der inaktiven eingefahrenen Situation ist.

28. Umverpackungsmaschine gemäß Anspruch 27, **gekennzeichnet durch** die Tatsache, dass die Stellmittel (23) eine Führungsableitung (29a, 29b) umfassen, die die zwei axialen Führungsschienen des Nippels (28a, 28b) und ein gesteuertes mobiles Ausrichtungsteil (30a, 30b), das geeignet ist, die Führung des Nippels (27) zu steuern, damit er in der axialen Führungsschiene des Nippels (28a, 28b) bleibt, in der er sich befand, oder dass er zur anderen axialen Führungsschiene des Nippels (28b, 28a) ausgerichtet wird, verbinden.

29. Umverpackungsmaschine gemäß Anspruch 10 bis 28, **gekennzeichnet durch** die Tatsache, dass die Mittel (10) zum Entstapeln Mittel (10d) umfassen, die geeignet sind, die zu entstapelnde Fläche (F) der Fläche (F), die ihr nachfolgt, mit Beschleunigungsmitteln der zu entstapelnden Fläche (F) zu beabstanden.
